# EUROPÄISCHE PATENTSCHRIFT

(11) **EP 1 931 472 B1**
(45) Veröffentlichungstag und Bekanntmachung des Hinweises auf die Patenterteilung: **07.01.2009**
(21) Anmeldenummer: 06778422.3
(22) Anmeldetag: 08.09.2006
(51) Int. Cl.: B01J 38/48, B01D 61/02, B01J 31/18

(54) **VERFAHREN ZUR ABTRENNUNG VON ORGANISCHEN ÜBERGANGSMETALLKOMPLEXKATALYSATOREN**
METHOD FOR SEPARATING ORGANIC TRANSITION METAL COMPLEX CATALYSTS
PROCEDE POUR SEPARER DES CATALYSEURS COMPLEXANTS DE METAUX DE TRANSITION ORGANIQUES

(30) Priorität: 27.09.2005 DE 102005046250
(43) Veröffentlichungstag der Anmeldung: 18.06.2008
(73) Patentinhaber: Evonik Oxeno GmbH, 45772 Marl (DE)
(72) Erfinder: WIESE, Klaus-Diether, 45721 Haltern (DE); BAUMGARTEN, Goetz, 45721 Haltern Am See (DE); KUPPINGER, Franz-Felix, 45768 Marl (DE); MÖLLER, Oliver, 45739 Oer-Erkenschwick (DE); ORTMANN, Dagmara, CH-3902 Brig-Glis (CH); BORGMANN, Cornelia, 60486 Frankfurt (DE); BÜSCHKEN, Wilfried, 45721 Haltern (DE)
(74) Vertreter: Hirsch, Hans-Ludwig
(86) Internationale Anmeldenummer: PCT/EP2006/066181
(87) Internationale Veröffentlichungsnummer: WO 2007/036424

(56) Entgegenhaltungen:
- WO-A-93/04029
- WO-A-94/19104
- US-A- 5 731 472

## Beschreibung

Die vorliegende Erfindung betrifft ein Verfahren zur Abtrennung von organischen Übergangsmetallkomplexkatalysatoren, insbesondere von Rhodiumkomplexkatalysatoren, aus Reaktionsgemischen, in denen diese Katalysatoren gelöst vorliegen.

Die Verwendung von homogenen Rhodiumkomplexkatalysatoren in verschiedenen Prozessen der industriellen organischen Chemie ist lange bekannt. Insbesondere die Verwendung Rhodiumphosphin, -phospit, -phosphonit oder -phosphinit-Ligand-Komplexen in Verfahren zur Hydroformylierung von Olefinen ist hinlänglich bekannt. Eine weite Verbreitung haben diese Verfahren allerdings noch nicht erfahren. Dies liegt vermutlich an den relativ teuren Katalysatoren und den Schwierigkeiten, diese möglichst vollständig aus den Reaktionsmischungen wieder abzutrennen.

Die Abtrennung des Katalysators vom Reaktionsgemisch kann auf einfachste Weise durch thermische Trennverfahren erfolgen, in dem das Reaktionsprodukt aus dem katalysatorhaltigen Reaktionsgemisch durch Verdampfen abgetrennt wird. Nachteilig an diesen Trennverfahren ist, dass das Reaktionsgemisch relativ hohen Temperaturen ohne Anwesenheit des stabilisierenden Synthesegases ausgesetzt werden muss und unter solchen Bedingungen die eingesetzten phosphorhaltigen Liganden zerstört werden können.

Um diese Problematik zu umgehen, sind mehrfach Vorschläge gemacht worden, die Abtrennung des Rhodium-Katalysators nicht mittels thermischer Verfahren vorzunehmen, sondern durch die Anwendung eines Membranverfahrens.

In WO 94/19104 wird die Anwendung einer Membran zur Abtrennung von Edelmetallkatalysatoren aus Hydroformylierungsgemischen vorgeschlagen. Bei diesem Verfahren erfolgt die Abtrennung des Komplexkatalysators bei Temperaturen von 75 bis 100 °C. Das Reaktionsgemisch wird nach Verlassen des Reaktors entspannt, so dass der Partialdampfdruck von Wasserstoff und Kohlenmonoxid jeweils 1 atm nicht übersteigt. Durch das Entspannen soll erreicht werden, dass der Komplexkatalysator als Liganden im Wesentlichen die phosphorhaltigen Liganden aufweist, und somit gewährleistet ist, dass der Komplexkatalysator an der Membran zurückgehalten wird.

In EP 0 781 166 wird die Abtrennung von gelöstem Rhodium-Organophosphit-Komplexkatalysator sowie freiem Liganden aus einer nicht-wässrigen Hydroformylierungs-Reaktionsmischung an einer Membran beschrieben, wobei an der Membran zumindest 90 Massen-% des Katalysators und des freien Liganden abgetrennt werden. Erreicht wird eine so hohe Abtrennung durch Einsatz einer Membran, die genau passend zu den voneinander zu trennenden Produkten ausgewählt wird. Ein solches Verfahren hat den Nachteil, dass bei Änderungen der Zusammensetzungen jeweils neue Membrane ausgewählt werden müssen, damit die hohe Rückhaltequote erzielt werden kann. Die Durchführung des Verfahren kann bei einer Temperatur von kleiner 150 °C und einem Druck von 344,5 kPa (3,445 bar) bis 10 MPa (100 bar) erfolgen. Den Beispielen ist zu entnehmen, dass der Druck des der Membran zugeführten Reaktionsgemisches durch Beaufschlagen mit Stickstoff erhöht wird. Der Druck auf der Permeatseite der Membran entspricht dem Atmosphärendruck.

In EP 1 232 008 wird das Verfahren aus EP 0 781 166 aufgegriffen und es wird zur Ausschleusung von Hochsiedern aus dem Katalysator-Rückführstrom eingesetzt. Um eine Verblockung der Membran durch die abzutrennenden Hochsieder zu verhindern, wird vor der Aufgabe des Rückführstroms auf die Membran ein Verdünnungsmittel zugegeben, welches sicherstellt, dass die Konzentration an Hochsiedern in dem der Membran zugeführten Strom kleiner-gleich 50 Gew.-% beträgt. Die Zugabe von Verdünnungsmittel ist nachteilig, weil die über die Membran geführte Stoffmenge vergrößert wird. Die Durchführung dieses Verfahrens kann bei einer Temperatur von 10 bis 50 °C und einem Druck von 0,1 bis 10 MPa erfolgen. Das Reaktionsprodukt der Hydroformylierung wird bei diesem Verfahren zunächst durch Entspannen von den gasförmigen Reaktionspartnern und durch ein thermisches Trennverfahren von den Reaktionsprodukten befreit, bevor der verbleibende Reststrom dem Membranverfahren zugeführt wird.

Nachteilig an den aus dem Stand der Technik bekannten Verfahren ist der häufig auftretende Aktivitätsverlust des Katalysators, so dass trotz einer effektiven Abtrennung des Rhodiums aus dem Reaktionsgemisch eine Abnahme der Aktivität des Katalysators zu beobachten ist. Insbesondere durch die Verclusterung des Rhodiums zu feindispersen Partikeln wird dieses bereits durch eine Mikrofiltration (0,45 µm) abscheidbar. In den Verfahren nach dem Stand der Technik wird kein Unterschied zwischen gelöstem Rhodium-Katalysator-Ligandsystem und feinstdispersem verclustertem, metallischem Rhodium gemacht. Dadurch werden erheblich bessere Rhodiumkomplexkatalysator-Rückhalte suggeriert, als tatsächlich mit den Verfahren nach dem Stand der Technik erzielbar sind. Diese Verclusterung wird indirekt bei der Interpretation der Ergebnisse des Beispiels 2 aus WO 01/37993 deutlich. Bei vollständiger Löslichkeit des Katalysatorligandkomplexes hätte bei gegebener Systemausbeute Φ von 0,923 (Konzentrierungsfaktor = 13; spez. Gewicht Permeat = spezifisches Gewicht Konzentrat) und einem Rhodium-Rückhalt R von 0,924 (R = 1-[Rh] Permeat/[Rh] Konzentrat) die Gesamtkonzentration an Rhodium im Konzentrat näherungsweise gemäß Rₜₒₜ= 1-(1-(1-Φ)exp(1-R)/Φ) = 0,81 bei dem gegebenen Konzentrierungsfaktor von 13 gemäß 13 x 0,81 x 171 ppm bei 1801 ppm liegen müssen. Tatsächlich liegt sie bei lediglich 1255 ppm. Es liegt die Vermutung nahe, dass Verclusterung und Niederschlag auf den Wandungen der Versuchsanlage die Ursache für den Minderbefund ist. In der Praxis bedeutet dieses Ergebnis einen unannehmbaren Verlust an aktivem, gelöstem Katalysator-Ligand-System.

Ausgehend von diesem Stand der Technik bestand die Aufgabe der vorliegenden Erfindung darin, ein Verfahren bereitzustellen, bei welchem einer oder mehrere der genannten Nachteile nicht auftreten. Vorzugsweise sollte ein Verfahren bereitgestellt werden, mit welchem der Übergangsmetallskomplexkatalysator möglichst vollständig, ohne das Auftreten von Verclusterungen (unter Verclusterung wird im Rahmen der vorliegenden Erfindung die Bildung von Verbindungen mit mindestens vier Metallatomen verstanden) und mit einem möglichst geringen Aktivitätsverlust abgetrennt werden kann.

Überraschenderweise wurde gefunden, dass ein Übergangsmetallkomplexkatalysator weitestgehend aus einem Hydroformylierungs-Reaktionsgemisch abgetrennt werden kann und die Aktivität des Übergangsmetallkatalysators weitestgehend aufrechterhalten werden kann, wenn die Abtrennung des Übergangsmetallkatalysators an einer Membran unter Bedingungen erfolgt, bei denen Kohlenmonoxid noch in stöchiometrischer Menge bezogen auf den Katalysator-Ligandkomplex im System vorliegt. Dies wird dadurch erreicht, dass das Hydroformylierungs-Reaktionsgemisch, gegebenenfalls nach einer Teilentspannung und Teilentgasung noch mindestens 200 kPa (2 bar) Kohlenmonoxidgasdruck, bevorzugt 1 MPa (10 bar) oder mehr Kohlenmonoxidgasdruck auf der Retentat- und Permeatseite der Membran aufweist. Der für den Membranprozess erforderliche transmembrane Druck von mindestens 1 MPa (10 bar) oder mehr wird durch den permeatseitigen Vordruck der Flüssigkeit eingestellt. Dieser Befund ist insbesondere deshalb überraschend, da in WO 94/19104 beschrieben wurde, dass beim Vorhandensein von Synthesegas im Feed zur Membran eine Abtrennung des Rhodiumkomplexkatalysators nur schlecht möglich sei.

Gegenstand der vorliegenden Erfindung ist deshalb ein Verfahren zur Abtrennung eines gelösten Komplexkatalysators eines Metalls der 4., 5., 6., 7., 8., 9. oder 10. Gruppe des Periodensystems der Elemente, der einen Organophosphor-Ligand aufweist, aus einer nicht-wässrigen Hydroformylierungs-Reaktionsmischung, die ein Hydroformylierungsprodukt und ein organisches Lösemittel enthält, wobei das Verfahren zumindest einen Membrantrennschritt aufweist, bei dem zumindest eine Membran eingesetzt wird, die für das Hydroformylierungsprodukt besser durchlässig ist als für den Organophosphor-Liganden, welches dadurch gekennzeichnet ist, dass die Hydroformylierungs-Reaktionsmischung in dem Membrantrennschritt auf eine Membran geführt wird, wobei der Membrantrennschritt bei einem Kohlenmonoxid-Partialdampfdruck von mindestens 200 kPa im Membranzufluss, im Membranabfluss und im Permeat durchgeführt wird.

Unter nicht-wässrigen Reaktionsmischungen werden im Rahmen der vorliegenden Erfindung Mischungen verstanden, die kein Wasser oder Wasser nur in so geringem Maße aufweisen, dass sich keine eigene wässrige Phase bildet. Falls Wasser vorhanden ist, ist jeweils nur soviel Wasser anwesend, wie sich homogen in der organischen Phase lösen kann. Unter dem Partialdampfdruck wird im Rahmen der vorliegenden Erfindung der Partialdruck, wie in Römpp Lexikon Chemie - Version 2.0, Stuttgart/New York: Georg Thieme Verlag 1999 definiert, verstanden.

Das erfindungsgemäße Verfahren hat den Vorteil, dass die Aktivität des abgetrennten Katalysators weitestgehend erhalten bleibt und einer Verclusterung des Rhodiums weitestgehend entgegengewirkt wird. Dies liegt bei der Verwendung von RhodiumKomplexkatalysatoren möglicherweise daran, dass sich bei Bedingungen, die sich bezüglich des Synthesegasdrucks deutlich von den Hydroformylierungsbedingungen unterscheiden, Rhodiumcluster bilden, die nicht mehr löslich sind und die durch eine einfache Änderung der Bedingungen nicht wieder in Lösung gebracht und aktiviert werden können. Diese Rh-Cluster können nach den Verfahren gemäß dem Stand der Technik zwar ebenfalls durch die Membran zurückgehalten werden, weshalb die Abtrennung des Katalysators gemäß dem Stand der Technik ganz gut gelingt, der abgetrennte Katalysator weist aber eine deutlich schlechtere oder gar keine Aktivität mehr auf.

Ein weiterer Vorteil des Verfahrens liegt darin, dass in der Kombination zumindest eines ersten Membrantrennschritts mit zumindest einem thermischen Trennschritt und ggf. zumindest eines weiteren Membrantrennschritts ein Systemrückhalt von > 98 % bezogen auf den Katalysatorligandkomplex erreicht werden kann. Nur in einer solchen Kombination gelingt die nahezu quantitative Rückgewinnung des Katalysators bei gleichzeitiger Produktgewinnung und Minimierung des Hochsiederanfalls. Die thermischen Trennung erlaubt die schadlose Abtrennung des Katalysators gerade bei kleinen Konzentrationen auch ohne stabilisierendes Synthesegas. Diese günstigen, niedrigen Konzentrationen in der thermischen Stufe, bei gleichzeitig vorteilhaft hohen Katalysator-Komplex-Konzentrationen im Reaktor werden durch das vorgeschaltete Membransystem überhaupt erst wirtschaftlich möglich.

Im Sumpf des oben beschriebenen thermischen Trennschritts können sich noch kleine Restmengen an Katalysator sowie Hochsieder befinden. Zur Ausschleusung des Hochsieders kann an dieser Stelle eine Nanofiltration nachgeschaltet werden, bei der weniger als 10 % der Zuführungsmenge als Permeat abgetrennt werden. Sie kann dafür sorgen, dass ein Hydroformylierungsgemisch (Permeat) mit noch weiter reduzierter Katalysatorkonzentration ausgeschleust werden kann.

Das erfindungsgemäße Verfahren zur Abtrennung eines gelösten Komplexkatalysators eines Metalls der 4., 5., 6., 7., 8., 9. oder 10. Gruppe des Periodensystems der Elemente, der einen Organophosphor-Ligand aufweist, aus einer nicht-wässrigen Hydroformylierungs-Reaktionsmischung, die ein Hydroformylierungsprodukt und ein organisches Lösemittel enthält, wobei das Verfahren zumindest einen Membrantrennschritt aufweist, bei dem zumindest eine Membran eingesetzt wird, die für das Hydroformylierungsprodukt besser durchlässig ist als für den Organophosphor-Liganden, zeichnet sich dadurch aus, dass die Hydroformylierungs-Reaktionsmischung in dem Membrantrennschritt auf eine Membran geführt wird, wobei der Membrantrennschritt bei einem Kohlenmonoxid-Partialdampfdruck von mindestens 200 kPa, vorzugsweise zumindest 400 kPa, besonders bevorzugt von 400 bis 8000 kPa und besonders bevorzugt von 500 bis 1000 kPa im Membranzufluss, im Membranabfluss und im Permeat durchgeführt wird. eingestellt wird. Wesentlich ist dabei, dass der Kohlenmonoxid-Partialdampfdruck sowohl im Membranzufluss, als auch im Membranabfluss sowie im Permeat mindestens 200 kPa aufweist.

Bei der Hydroformylierung wird als ein Edukt üblicherweise Synthesegas (ein Gemisch aus Wasserstoff und Kohlenmonoxid, vorzugsweise ein ca. äquimolares Gemisch) eingesetzt. Üblicherweise wird das Synthesegas im Überschuss eingesetzt. Ohne eine vollständige Entspannung oder Entgasung ist deshalb in der Regel genügend Kohlenmonoxid im Reaktionsaustrag des Hydroformylierungsreaktors vorhanden den geforderten Kohlenmonoxid-Partialdampfdruck im Membrantrennschritt sicherzustellen. Sollte es notwendig sein, ist es ist jedoch möglich, zur Erhöhung des Kohlenmonoxid-Partialdampfdruckes zusätzliches Kohlenmonoxid einzuspeisen. Der Kohlenmonoxid-Partialdampfdruck kann z. B. durch Gasanalyse und Messung des Gesamtdrucks der Gasphase bestimmt werden.

Zusätzlich zum Kohlenmonoxid kann sich im Reaktionsgemisch Wasserstoff (aus dem Synthesegas) befinden, dessen Partialdampfdruck in der gleichen Größenordnung wie die des Kohlenmonoxids liegt. Besonders bevorzugt ist der Wasserstoff-Partialdampfdruck größer als 200 kPa (2 bar).

Das erfindungsgemäße Verfahren kann unter Einsatz von ein, zwei oder mehr Membranen oder unter Einsatz von einem, zwei oder mehreren Membrantrennschritten durchgeführt werden. Je nach Trennleistung der Membran und gewünschtem Rückhalt, kann, durch die Hintereinanderschaltung mehrerer Membrantrennschritte der gewünschte Rückhalt erzielt werden. In dem erfindungsgemäßen Verfahren können insbesondere zwei oder mehrere Membrantrennschritte durchgeführt werden. Die Membrantrennschritte können direkt hintereinander durchgeführt werden. Es kann aber vorteilhaft sein, wenn zwischen Membrantrennschritten z. B. thermische Trennschritte durchgeführt werden und nur ein Teil des beim thermischen Trennschritt erhaltenen Reaktionsgemisches dem nachfolgenden Membrantrennschritt zugeführt werden. Die Hintereinanderschaltung kann in der Weise erfolgen, dass entweder das Retentat oder das Permeat, vorzugsweise das Permeat eines ersten Membrantrennschritts als Zuführstrom in einen weiteren Membrantrennschritt geleitet wird. Die auf den ersten erfindungsgemäßen Membrantrennschritt gegebenenfalls folgenden Membrantrennschritte können ebenfalls unter ähnlichen Bedingungen wie der erste durchgeführt werden. In einem Membrantrennschritt können eine Membran oder mehrere Membrane eingesetzt werden. Vorzugsweise werden in einem Membrantrennschritt zwei oder mehre Membrane eingesetzt.

Im erfindungsgemäßen Verfahren ist die obere Temperaturgrenze bei den Membrantrennschritten durch die Stabilität der eingesetzten Membrane und die Stabilität des Katalysatorsystems vorgegeben. Vorzugsweise wird die Stofftrennung an der Membran bei gleicher oder tieferer Temperatur als die Hydroformylierung durchgeführt. Bevorzugt wird in dem erfindungsgemäßen Verfahren ein Membrantrennschritt, insbesondere der erste Membrantrennschritt, bei einer Temperatur von 20 bis 150 °C, besonders bevorzugt bei einer Temperatur von 30 bis 140 °C und ganz besonders bevorzugt bei einer Temperatur von 50 bis 125 °C durchgeführt. Werden in dem erfindungsgemäßen Verfahren zur Abtrennung von Katalysator aus Hydroformylierungs-Reaktionsgemischen solche eingesetzt, die bei der Hydroformylierung von C₁₂-Olefinen erhalten werden, so wird der Membranschritt, insbesondere der erste Membranschritt vorzugsweise bei einer Temperatur von 100 bis 125 °C durchgeführt. Werden in dem erfindungsgemäßen Verfahren zur Abtrennung von Katalysator aus Hydroformylierungs-Reaktionsgemischen solche eingesetzt, die bei der Hydroformylierung von C₈-Olefinen erhalten werden, so wird der Membranschritt, insbesondere der erste Membranschritt vorzugsweise bei einer Temperatur von 50 bis 70 °C durchgeführt. Das Durchführen der erfindungsgemäßen Abtrennung bei den bevorzugten Temperaturen kann zum Einen einen höheren Fluss durch die Membran bewirken. Zum Anderen wird durch ein Einhalten der genannten bevorzugten Temperaturbereiche eine Zersetzung des Katalysators verlangsamt bzw. vermieden, die sonst zu Verlusten an aktivem Katalysator und zu einer Ablagerung von Zersetzungsprodukten des Katalysators auf der Membran führen kann. Durch eine Ablagerung kann der Mengenstrom durch die Membran gemindert werden, im Extremfall kann der Mengenfluss durch Verblocken ganz zum Erliegen kommen.

Der transmembrane Druck (Druck an der Membran zwischen Retentat- und Permeatseite), bei dem die erfindungsgemäße Abtrennung Membrantrennschritt bevorzugt durchgeführt wird, beträgt vorzugsweise zumindest 1 MPa, bevorzugt von 1 bis 10 MPa und besonders bevorzugt von 2 bis 4 MPa.

Der Gesamtdruck, bei der die Trennung im Membrantrennschritt, insbesondere im ersten Membrantrennschritt (Membrantrennschritt vor einem gegebenenfalls durchgeführten thermischen Trennschritt) durchgeführt wird, kann größer, gleich oder kleiner als der Druck im Hydroformylierungsreaktor sein. Vorzugsweise ist der Druck kleiner als im Hydroformylierungsreaktor. Der Druck mit dem das Hydroformylierungs-Reaktionsgemisch auf die Membran gefahren wird, entspricht vorzugsweise 90 bis 100 % oder 60 bis 90 % oder 40 bis 60 % oder weniger als 40 % des Druckes im Hydroformylierungsreaktor, mit der Maßgabe, dass der Partialdampfdruck des Kohlenmonoxids mindestens 200 kPa (2 bar) beträgt. Werden in dem erfindungsgemäßen Verfahren zur Abtrennung von Katalysator aus Hydroformylierungs-Reaktionsgemischen solche eingesetzt, die bei der Hydroformylierung von C₁₂-Olefinen erhalten werden, so beträgt der Druck, mit dem das Hydroformylierungs-Reaktionsgemisch auf die Membran gefahren wird, vorzugsweise weniger als 40 % des Druckes im Hydroformylierungsreaktor. Werden in dem erfindungsgemäßen Verfahren zur Abtrennung von Katalysator aus Hydroformylierungs-Reaktionsgemischen solche eingesetzt, die bei der Hydroformylierung von C₈-Olefinen erhalten werden, so beträgt der Druck, mit dem das Hydroformylierungs-Reaktionsgemisch auf die Membran gefahren wird, vorzugsweise 60 bis 100 % des Druckes im Hydroformylierungsreaktor.

Besonders bevorzugt wird das Verfahren so durchgeführt, dass der Membrantrennschritt, insbesondere der erste Membrantrennschritt bei gleichem Druck und gegebenenfalls bei gleicher Temperatur wie im Hydroformylierungsreaktor durchgeführt wird, werden kann.

In dem erfindungsgemäßen Verfahren können Membranen eingesetzt werden, die auf Grund von ihren chemischen oder physikalischen Eigenschaften geeignet sind, phosphororganischen Metall-Komplexkatalysator und/oder freien Organophosphor-Ligand vorzugsweise in einem Maße von zumindest 50 % zurückzuhalten. Eine weitere Voraussetzung für die Verwendbarkeit der Membran besteht darin, dass die Membran stabil gegenüber allen in der Hydroformylierungs-Reaktionsmischung vorhandenen Verbindungen, insbesondere gegenüber den Lösentitteln sein muss. Vorzugsweise werden Membranen eingesetzt, die eine trennaktive Schicht aus einem Material, ausgewählt aus Celluloseacetat, Cellulosetriacetat, Cellulosenitrat, regenerierter Cellulose, Polyimiden, Polyamiden, Polyetheretherketonen, aromatischen Polyamiden, Polyamidimiden, Polybenzimidazolen, Polybenzimidazolone, Polyacrylnitril, Polyarylethersulfone, Polyester, Polycarbonaten, Polytetrafluorethylen, Polyvinylidenfluorid, Polypropylen, Polydimethylsiloxan (PDMS), Polyetheretherketon (PEEK), Acrylonitril/Glycidylmethacrylat (PANGMA), mit Silanen hydrophobisierte keramische Membranen, wie sie in DE 103 08 111 beschrieben sind, Polymere mit intrinsischer Mikroporösität (PIM) und anderen, wie sie z. B. in EP 0 781 166 und in "Membranes" von I. Cabasso, Encyclopedia of Polymer Sience and Technlogy, John Wiley and Sons, New York, 1987, beschrieben werden, aufweisen oder aus einem dieser Materialien bestehen, eingesetzt. Besonders bevorzugt werden Membrane eingesetzt, die als trennaktive Schicht eine Polymerschicht aus Polydimethlysiloxan (PDMS), Polyimid (PI), Polyamidimid (PAI), Acrylonitril/Glycidylmethacrylat (PANGMA), Polyamid (PA) oder Polyetheretherketon (PEEK) aufweisen, diese aus Polymeren mit intrinsischer Mikroporosität (PIM) aufgebaut ist, oder wobei die trennaktive Schicht über eine hydrophobierte keramische Membran aufgebaut ist. Ganz besonders bevorzugt werden als Membrane solche aus PDMS oder Polyamidimid eingesetzt Solche Membrane sind z. B. von Firma. GMT, Rheinfelden (DE) oder Firma Solsep, Apeldoorn (NL) zu beziehen. Neben den oben genannten Materialien können die Membrane weitere Materialien aufweisen. Insbesondere können die Membrane Stütz- oder Trägermaterialien aufweisen, auf die die trennaktive Schicht aufgebracht ist. Bei solchen Verbundmembranen liegt neben der eigentlichen Membran noch ein Stützmaterial vor. Eine Auswahl von Stützmaterialien beschreibt EP 0 781 166, auf welches explizit verwiesen wird. Weiterhin können in der erfindungsgemäße einsetzbaren Membran Verstärkungsmaterialien vorhanden sein, wie z. B. Partikel von anorganischen Oxiden oder anorganische Fasern, wie z. B. Keramik- oder Glasfasern, die die Stabilität der Membrane insbesondere gegenüber Druckschwankungen oder hohen Druckdifferenzen erhöhen.

Im erfindungsgemäßen Verfahren werden vorzugsweise Membrane eingesetzt, die für Moleküle bis zu einer Molmasse bis zu 1000 g/mol, bevorzugt für Moleküle mit einer Molmasse bis 900 g/mol und ganz besonders bevorzugt für Moleküle mit einer Molmasse bis 500 g/mol durchlässig sind. Solche Membrane sind z. B. von der Fa. Solsep oder von der Fa. MET unter den Handelsnamen Solsep 010606 bzw. Starmem 240 erhältlich.

Besonders bevorzugt werden bei dem erfindungsgemäßen Verfahren solche Membranen eingesetzt, bei denen der Löslichkeitsparameter des Hydrofomylierungsproduktes, insbesondere des Aldehyds sich in Bezug auf den Löslichkeitsparameter der eingesetzten Membran um zumindest ±50 √(kJ/m³), bevorzugt um zumindest ±50 √(kJ/m³) aber vorzugsweise um nicht mehr als ±500 √(kJ/m³), vorzugsweise um nicht mehr als ±400 √(kJ/m³) unterscheidet.

Das Molekular-Volumenverhältnis der Organophosphor-Liganden (frei oder im Komplex gebunden) zu den Hydroformylierungsprodukten, insbesondere den Aldehyden, sollte vorzugsweise größer-gleich 1,5, bevorzugt größer-gleich 3,0 und besonders bevorzugt größer gleich 3,5 betragen. Durch den großen molaren Volumenunterschied wird eine besonders gute Trennung von Ligand und Hydroformylierungsprodukt an der Membran erreicht. Die Löslichkeitsparameter und Molekularvolumen können wie in EP 0 781 166 B1, insbesondere in den Abschnitten [0053] fortfolgende sowie in der dort zitierten Literatur beschrieben, bestimmt werden.

Die Membranen werden in dem erfindungsgemäßen Verfahren vorzugsweise in Form von Membranmodulen eingesetzt. In diesen Modulen werden die Membranen so angeordnet, dass die Retentatseite der Membran derart überströmt werden kann, dass die Konzentrationspolarisation der abgetrennten Komponenten, hier Katalysator-Ligandsystem, entgegengewirkt und außerdem die nötige treibende Kraft (Druck) aufgeprägt werden kann. Das Permeat wird im Permeatsammelraum auf der Permeatseite der Membran zusammengeführt und aus dem Modul abgeführt. Gängige Membranmodule weisen die Membrane in Form von Membranscheiben, Membrankissen oder Membrantaschen auf. Im erfindungsgemäßen Verfahren werden die Membrane vorzugsweise in Form von Membranmodulen eingesetzt, die Membranmodule mit offenkanaligen Kissenmodulsystemen, bei denen die Membranen zu Membrantaschen oder -kissen thermisch verschweißt oder verklebt sind, oder offenkanaligen (Wide-spacer) Wickelmodulen, bei denen die Membranen zu Membrantaschen oder Membrankissen verklebt oder verschweißt sind und mit Feed-spacern um ein Permeatsammelrohr aufgewickelt sind, aufweisen. Membranmodule, die offenkanalige Zuflusssysteme aufweisen, bei denen die Membranen thermisch zu Membrantaschen oder Membrankissen verschweißt oder verklebt sind, sind z. B. bei der Firma Solsep, Apeldoorn (NL) und der Firma MET, London (UK) unter dem Namen SR-5 bzw. Starmem 240 zu beziehen. Solche Membrane können beispielsweise aus dem Polyimid mit dem Handelsnamen P84 der Degussa AG, Düsseldorf hergestellt werden.

Zur Vermeidung von Ablagerungen auf der Membran wird das Verfahren vorzugsweise so durchgeführt, dass der Membrantrennschritt, insbesondere der erste Membrantrennschritt mit einer Überströmgeschwindigkeit an der Membran von 0,1 bis 15 m/sec., bevorzugt 0,2 bis 4 m/sec, vorzugsweise von 0,3 bis 1 m/sec vorliegt.

Vorzugsweise wird das erfindungsgemäße Verfahren so betrieben, dass die Hydroformylierungs-Reaktionsmischung aus dem Reaktor als Zustrom auf die Membran gefahren und der Retentatstrom teilweise auf die Membran zurückgeführt wird. Dabei wird der Teilstrom, der auf die Membran zurückgeführt wird, zuvor mit dem Strom vom Reaktor vereinigt. Der Teil des Retentatstroms, der nicht auf die Membran zurückgeführt wird, wird entweder als Zufuhrstrom für eine oder mehrere nachfolgende Abtrennstufen verwendet oder aber in die Reaktion zurückgeführt.

Vorzugsweise beträgt das Volumenstrom-Verhältnis von Permeatstrom zu Zufuhrstrom vom Reaktor (ohne rückgeführtem Retentat) 1 zu 5 bis 1 zu 20, bevorzugt von 1 zu 7,5 bis 1 zu 12,5 und besonders bevorzugt von 1 zu 9 bis 1 zu 11. Die Einstellung des Volumenstromverhältnisses durch eine Veränderung der individuellen Systemausbeute ist über die Anpassung des Differenzdrucks und des Verhältnisses von Permeatvolumenstrom zu Volumen von Zuführstrom möglich.

Es kann vorteilhaft sein, wenn der Volumenstrom, der über die Membran geführt wird, deutlich größer ist als der Volumenstrom des Permeatstroms, da auf diese einfache Weise eine hohe Überströmgeschwindigkeit an der Membran eingestellt werden kann. Vorzugsweise beträgt das Volumenstromverhältnis des auf die Membran, insbesondere auf die erste Membran des ersten Membrantrennschritts geführten Stroms (Zufluss vom Reaktor inklusive rückgeführtem Retentat) zu Permeatstrom von 10 bis 10000 zu 1, bevorzugt von 50 bis 5000 zu 1 und besonders bevorzugt von 200 bis 2000 zu 1. Es wird also vorzugsweise ein relativ hoher Volumenstrom im Kreis über die Membran geführt. Die Größe des Teils des Retentatstroms, der in die Reaktion zurückgeführt oder einer weiteren Abtrennung zugeführt wird, ergibt sich aus der Differenz von Zufuhrstrom (ohne rückgeführtem Retentat) und Permeatstrom.

Das an der Membran erhaltene Permeat weist vorzugsweise eine Zusammensetzung auf, bei der der Anteil an Metall-Komplexkatalysator und/oder an freiem Organophosphor-Ligand zumindest 50 %, bevorzugt zumindest 75 %, besonders bevorzugt zumindest 85 % und ganz besonders bevorzugt 90 % kleiner als im Retentat ist.

Das Permeat, welches gemäß dem Verfahren der vorliegenden Erfindung aus dem Membrantrennschritt erhalten wird, kann auf herkömmliche Weise aufgearbeitet werden. Besonders bevorzugt wird anschließend an einen Membrantrennschritt ein thermischer Trennschritt zur Abtrennung des Hydroformylierungsproduktes durchgeführt. Ein solcher thermischer Trennschritt kann z. B. durch eine oder mehrere thermische Trennapparaturen, wie z. B. Dünnschichtverdampfer, Fallfilmverdampfer, Flashverdampfer oder Destillationskolonnen, realisiert werden. Als Kopfprodukt wird üblicherweise das Hydroformylierungsprodukt, wie z. B. Aldehyd und/oder Alkohol sowie evtl. nicht umgesetzte Kohlenwasserstoffe, wie z. B. Olefine oder Aliphaten und gegebenenfalls bei der Hydroformylierung eingesetztes Lösemittel, welches eine Siedetemperatur im Bereich der Hydroformylierungsprodukte oder niedriger hat, erhalten, welches einer weiteren Aufarbeitung zugeführt werden kann. Als Sumpfprodukt des thermischen Trennschrittes wird ein Gemisch erhalten, welches den Komplexkatalysator und/oder freien Liganden, gegebenenfalls ein höher als das Hydroformylierungsprodukt siedendes Lösemittel sowie während der Hydroformylierung entstandene Hochsieder enthält.

Dieses Sumpfprodukt kann, vorzugsweise nach einer Ausschleusung eines Teils der Hochsieder, die thermisch oder mittels einer (Membran-)Filtration erfolgen kann, in den Hydroformylierungsreaktor zurückgeführt werden. Vorzugsweise wird das Sumpfprodukt des thermischen Trennschritts, das Hochsieder und Katalysatorkomplex aufweist, einem weiteren Membrantrennschritt zugeführt wird, bei dem aus dem Sumpfprodukt ein Teil der Hochsieder als Permeat abgetrennt und der im Retentat verbliebene Katalysatorkomplex zumindest teilweise in den Reaktor zurückgeführt wird. Bei dieser Trennung können hinsichtlich Temperatur und Partialdampfdrücke von Kohlenmonoxid und/oder Wasserstoff die gleichen Bedingungen wie bei der ersten Membrantrennung eingestellt werden. Dazu kann es notwendig sein, ein Gas oder ein Gasgemisch aufzudrücken. Optional kann die Membrantrennung auch ohne Gaszufuhr durchgeführt werden. Durch die gekoppelte Abtrennung von Komplexkatalysator und/oder freiem Liganden in einem ersten Membrantrennschritt und in einem anschließenden thermischen Trennschritt wird erreicht, dass der Katalysator im Wesentlichen vollständig aus der Hydroformlylierungs-Reaktionsmischung abgetrennt werden kann und zum überwiegenden Teil in der aktiven Form dem Prozess wieder zugeführt werden kann. Der bei der thermischen Abtrennung evtl. entstehende inaktive Katalysator kann gemeinsam mit den Hochsiedern ausgeschleust werden und z. B. durch Aufarbeitung zum Rhodiummetall zurückgewonnen werden. Der Gesamtrückhalt an Komplexkatalysator und/oder freiem Ligand in dem erfindungsgemäßen Verfahren aus zumindest einem ersten Membrantrennschritt, zumindest einem thermischen Trennschritt und gegebenenfalls anschließendem zumindest einem Membrantrennschritt, beträgt vorzugsweise mehr als 98 %.

Es kann vorteilhaft sein, wenn aus dem Permeat, bevor dieses in die thermische Trennstufe geführt wird, ein Teil der Inhaltsstoffe entfernt werden. Insbesondere kann es vorteilhaft sein, solche Inhaltsstoffe aus dem Permeat abzutrennen, die bei den Druckbedingungen, bei denen die thermische Trennstufe betrieben wird, gasförmig vorliegen. Solche Inhaltsstoffe können insbesondere Wasserstoff und Kohlenmonoxid sowie gegebenenfalls Kohlenwasserstoffe sein. Zur Abtrennung dieser Inhaltsstoffe wird das Permeat bevorzugt einer Entgasung zugeführt, in welcher das Permeat auf einen geringeren Druck, vorzugsweise einen Druck, der gleich oder maximal 10 % höher als der Druck in der thermischen Trennstufe ist, entspannt wird. Die nach der Entspannung gasförmig vorliegenden Stoffe werden abgetrennt und können aufgearbeitet oder entsorgt werden oder aber direkt in die Reaktion zurückgeführt werden. Die verbleibenden, weiterhin flüssig vorliegenden Bestandteile des Permeats werden dann der thermischen Trennstufe zugeführt.

Das im erfindungsgemäßen Verfahren eingesetzte Hydroformylierungs-Reaktionsgemisch kann aus den unterschiedlichsten bekannten Hydroformylierungsverfahren stammen. Die Hydroformylierungs-Reaktionsgemische können aus Verfahren zur Hydroformylierung von Olefinen, bevorzugt mit 2 bis 25 Kohlenstoffatomen, besonders bevorzugt 4 bis 16, ganz besonders bevorzugt von 6 bis 12 und insbesondere von 8, 9, 10, 11 oder 12 Kohlenstoffatomen, zu den entsprechenden Aldehyden stammen. Ganz besonders bevorzugt weist das Hydroformylierungs-Reaktionsgemisch als Hydroformylierungsprodukt einen Aldehyd auf, welcher ausgewählt ist aus Aldehyden mit 5 bis 17 Kohlenwasserstoffatomen, vorzugsweise 9 oder 13 Kohlenwasserstoffatomen, insbesondere Isononanal und Isotridecanal.

Die in dem Hydroformylierungs-Reaktionsgemisch vorhandenen Komplexkatalysatoren und/oder freien Organophosphor-Liganden können die aus dem Stand der Technik bekannten Verbindungen und Komplexe sein. Vorzugsweise weisen die Komplexkatalysatoren oder die freien Liganden solche Liganden auf, die ausgewählt sind aus den Phosphinen, Phosphiten, Phosphiniten, Phosphoniten. Die Liganden können dabei eine oder mehrere Phosphino-, Phosphito-, Phosphonito- oder Phosphinito-Gruppen aufweisen. Ebenso ist es möglich, dass die Liganden zwei oder mehr unterschiedliche Gruppen ausgewählt aus den Phosphino-, Phosphito-, Phosphonito- oder Phosphinito-Gruppen aufweisen. Insbesondere können die Liganden Bisphosphite, Bisphosphine, Bisphosphonite, Bisphosphinite, Phosphinphosphite, Phosphinphosphonite, Phosphinphosphinite, Phosphitphosphonite, Phosphitphosphinite oder Phosphonitphosphinite sein. Die Liganden des Komplexkatalysators und die freien Liganden können gleich oder unterschiedlich sein. Vorzugsweise sind die phosphororganischen Liganden des Komplexkatalysators und die freien Liganden gleich. Beispiel für einsetzbare Komplexkatalysatoren bzw. Liganden und deren Herstellung und Verwendung bei der Hydroformylierung können z. B. EP 0 213 639, EP 0 214 622, EP 0 155 508, EP 0 781 166, EP 1209164, EP 1201675, DE 10114868, DE 10140083, DE 10140086, DE 10210918 oder WO 2003/078444 entnommen werden, auf welche ausdrücklich Bezug genommen wird.

Beispiele für bevorzugte Liganden sind:

Phosphine: Triphenylphosphin, Tris(p-tolyl)phosphin, Tris(m-tolyl)phosphin, Tris(o-tolyl)phosphin, Tris(p-methoxyphenyl)phosphin, Tris(p-dimethylaminophenyl)phosphin, Tricyclohexylphosphin, Tricyclopentylphosphin, Triethylphosphin, Tri-(1-naphthyl)phosphin, Tribenzylphosphin, Tri-n-butylphosphin, Tri-t-butylphosphin.

Phosphite: Trimethylphosphit, Triethylphosphit, Tri-n-propylphosphit, Tri-i-propylphosphit, Tri-n-butylphosphit, Tri-i-butylphosphit, Tri-t-butylphosphit, Tris(2-ethylhexyl)phosphit, Triphenylphosphit, Tris(2,4-di-t-butylphenyl)phosphit, Tris(2-t-butyl-4-methöxyphenyl)phosphit, Tris(2-t-butyl-4-methylphenyl)phosphit, Tris(p-kresyl)phosphit.

Phosphonite: Methyldiethoxyphosphin, Phenyldimethoxyphosphin, Phenyldiphenoxyphosphin, 2-Phenoxy-2H-dibenz[c,e][1,2]oxaphosphorin und dessen Derivate, in denen die Wasserstoffatome ganz oder teilweise durch Alkyl- und/oder Arylreste oder Halogenatome ersetzt sind.

Gängige Phosphinitliganden sind Diphenyl(phenoxy)phosphin und dessen Derivate Diphenyl(methoxy)phosphin und Diphenyl(ethoxy)phosphin.

Besonders bevorzugt weisen erfindungsgemäß eingesetzte Hydroformylierungs-Reaktionsgemische ein Acyl- oder Heteroacylphosphit oder einen Acyl- oder Heteroacylphosphit-Gruppe aufweisenden Ligand als Organophosphor-Ligand auf. Acylphosphite oder Acylphosphit-Gruppen aufweisende Liganden, deren Herstellung und deren Einsatz in der Hydroformylierung werden beispielsweise in DE 100 53 272 beschrieben, die Bestandteil der Offenbarung der vorliegenden Erfindung sein soll. Heteroacylphosphite und Heteroacylphosphit-Gruppen aufweisende Liganden, deren Herstellung und deren Einsatz in der Hydroformylierung werden beispielsweise in DE 10 2004 013 514 beschrieben.

Von den in DE 100 53 272 beschriebenen Acylphosphiten sind insbesondere die nachfolgend aufgeführten Acylphosphite besonders bevorzugte Organophosphor-Liganden, die in einer erfindungsgemäß eingesetzten Hydroformylierungs-Reaktionsmischung als Komplexligand und/oder als freier Ligand vorhanden sein können.

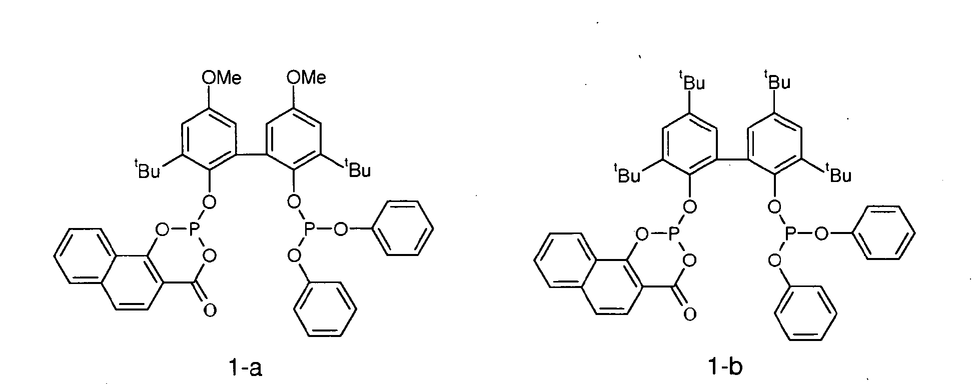

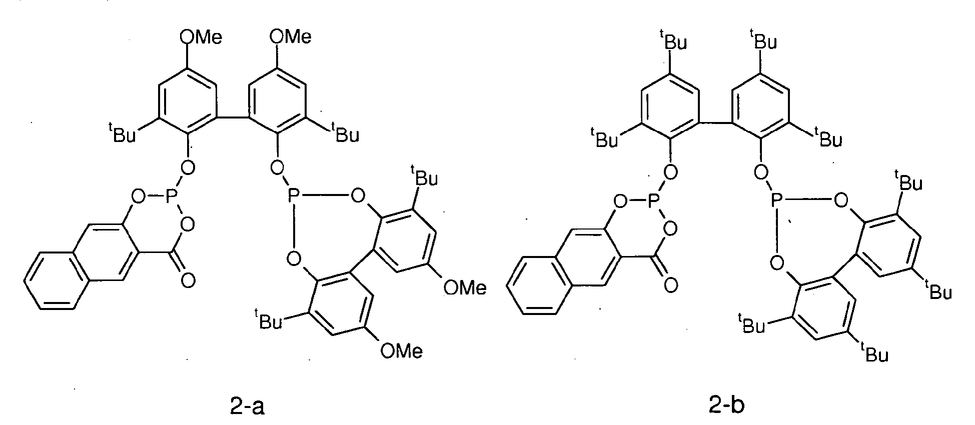

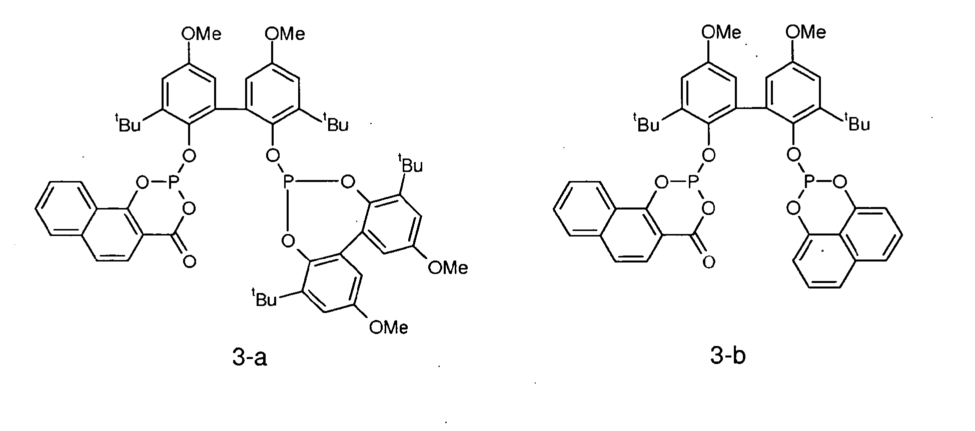

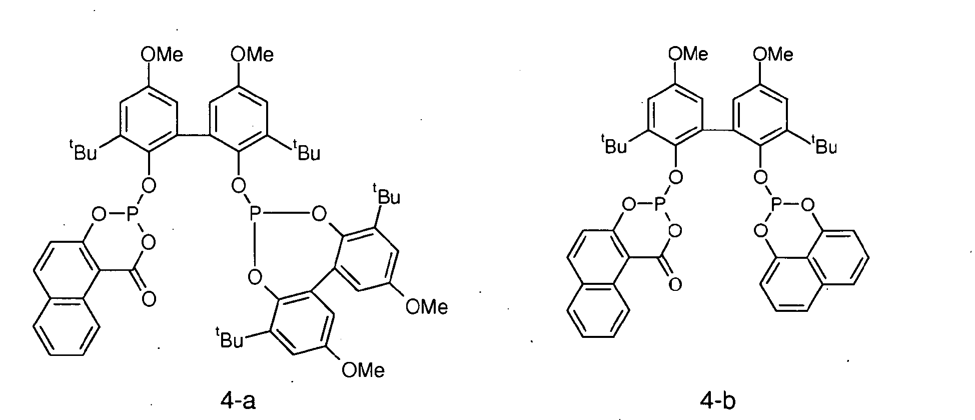

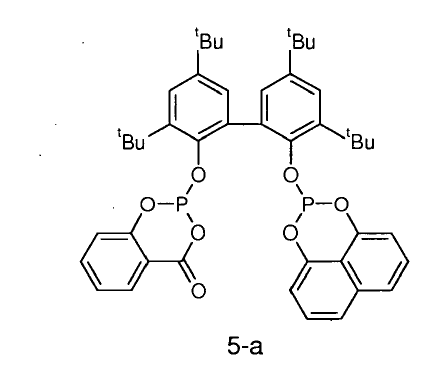

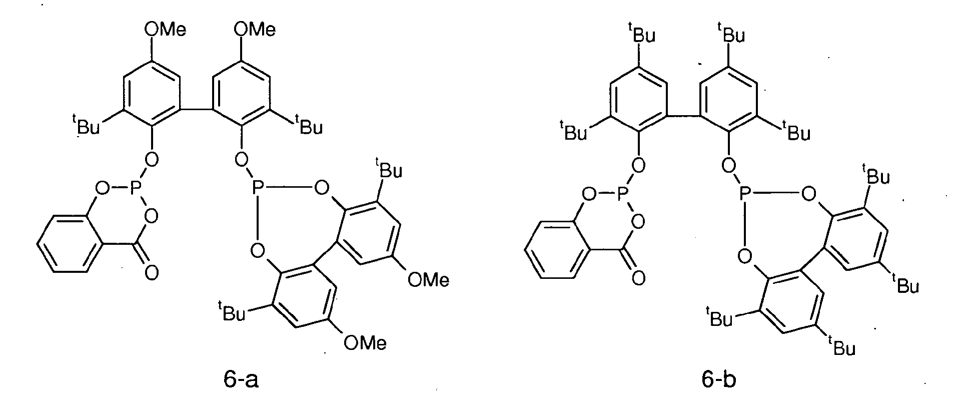

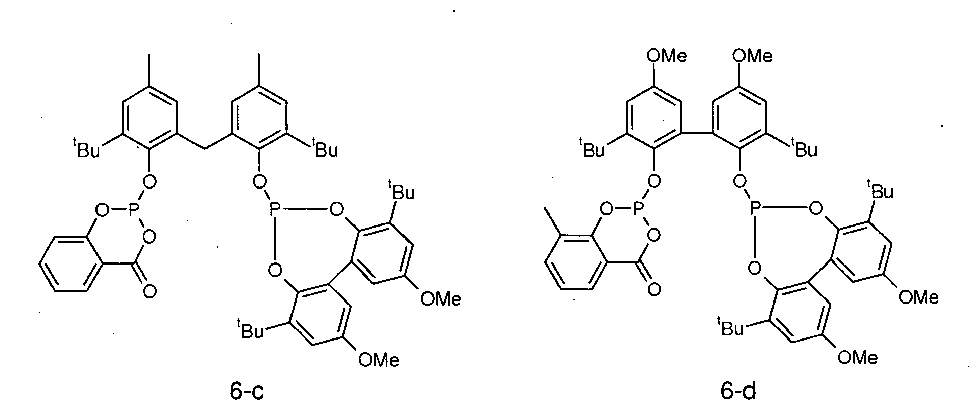

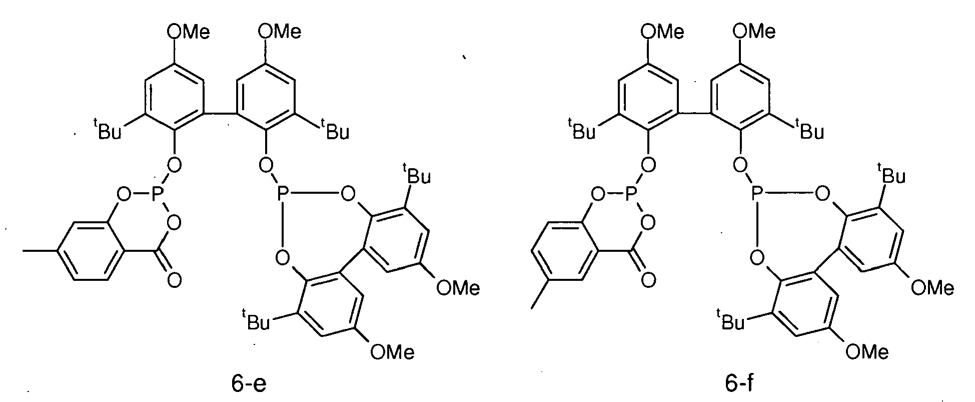

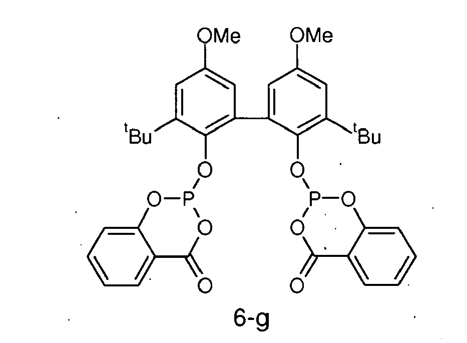

Im erfindungsgemäßen Verfahren werden in einer weiteren bevorzugten Ausführungsform Hydroformylierungs-Reaktionsmischungen eingesetzt, die die in DE 10 2004 013 514 beschriebenen Heteroacylphosphite gemäß der allgemeinen Formel (1) aufweisen, 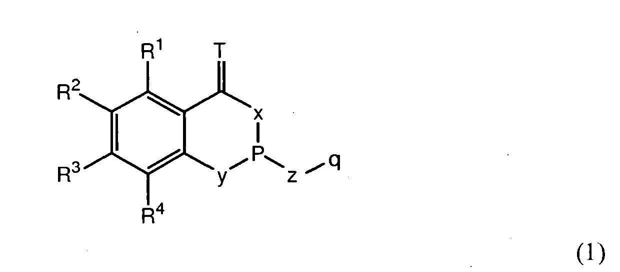 wobei R¹, R², R³, R⁴ und q jeweils gleich oder verschieden für einen substituierten oder unsubstituierten aliphatischen, alicyclischen, aromatischen, heteroaromatischen, gemischt aliphatisch-alicyclischen, gemischt aliphatisch-aromatischen, heterocyclischen, gemischt aliphatisch-heterocyclischen Kohlenwasserstoffrest mit 1 bis 70 Kohlenstoffatomen, H, F, Cl, Br, I, -CF₃, -CH₂(CF₂)ⱼCF₃ mit j = 0 - 9, -OR⁵, -COR⁵, -CO₂R⁵, -CO₂M, -SiR⁵₃, -SR⁵, -SO₂R⁵, -SOR⁵, -SO₃R⁵, -SO₃M, -SO₂NR⁵R⁶, -NR⁵R⁶, -N=CR⁵R⁶, wobei R⁵ und R⁶ gleich oder verschieden eine der Bedeutungen von R¹ besitzen und M ein Alkalimetall-, formal ein halbes Erdalkalimetall-, Ammonium- oder Phosphoniumion ist, stehen, x, y, z und T unabhängig voneinander O, NR⁷, S bedeuten, wobei R⁷ eine der Bedeutungen von q besitzt.

In bevorzugten Ausführungsformen weisen q, R¹, R², R³ und R⁴ die genannten Bedeutungen für Kohlenwasserstoffreste auf, jedoch sind die Reste unsubstituiert mit einer Anzahl Kohlenstoffatomen von 1 bis 50, insbesondere von 1 bis 25.

Weiterhin stehen R⁵, R⁶ und R⁷ bevorzugt für H, oder einen unsubstituierten aliphatischen oder aromatischen Kohlenwasserstoffrest mit 1 bis 25 Kohlenstoffatomen.

Es ist möglich, das je zwei benachbarte Reste R¹ bis R⁴ (R' und R², R² und R³, R³ und R⁴) zusammen ein annelliertes substituiertes oder unsubstituiertes aromatisches, heteroaromatischcs, aliphatisches, gemischt aromatisch-aliphatisches oder gemischt heteroaromatisch-aliphatisches Ringsystem bilden.

In einem bevorzugten Heteroacylphosphit gemäß Formel (1) ist der Rest q aus Aromaten oder Heteroaromaten, die unsubstituiert oder mit mindestens einem Rest, ausgewählt aus aliphatischen, alicyclischen, aromatischen, heteroaromatischen, gemischt aliphatisch-alicyclischen, gemischt aliphatisch-aromatischen, heterocyclischen, gemischt aliphatisch-heterocyclischen Kohlenwasserstoffresten mit 1 bis 25 Kohlenstoffatomen, F, Cl, Br, I, -CF₃, -CH₂(CF₂)ⱼCF₃ mit j = 0 - 9, -OR⁵, -COR⁵, -CO₂R⁵, -CO₂M, -SiR⁵₃,-SR⁵, -SO₂R⁵, -SOR⁵, -SO₃R⁵, -SO₃M, -SO₂NR⁵R⁶, -NR⁵R⁶, oder -N=CR⁵R⁶, substituiert sind, wobei R⁵, R⁶ und M wie zuvor definiert sind, ausgewählt.

In einer weiteren Verfahrensvariante wird ein Heteroacylphosphit der Formel (1) eingesetzt, dessen Rest q aus den Resten -W-R besteht, wobei W ein zweibindiger substituierter oder unsubstituierter aliphatischer, alicyclischer, gemischt aliphatisch-alicyclischer, heterocyclischer, gemischt aliphatisch-heterocyclischer, aromatischer, heteroaromatischer, gemischt aliphatisch-aromatischer Kohlenwasserstoffrest mit 1 bis 50 Kohlenstoffatomen ist und der Rest R für ein -OR⁵, -NR⁵R⁶, Phosphit, Phosphonit, Phosphinit, Phosphin oder Heteroacylphosphit steht, wobei R⁵ und R⁶ gleich oder verschieden eine der Bedeutungen von R¹ besitzt, jedoch bevorzugt unabhängig voneinander H, unsubstituierter aliphatischer und aromatischer Kohlenwasserstoffrest mit 1 bis 25 Kohlenstoffatomen bedeutet.

In einem bevorzugt eingesetzten Heteroacylphosphit gemäß Formel (1), der einen Rest q mit - W-R aufweist, steht W für einen Rest gemäß Formel (2) 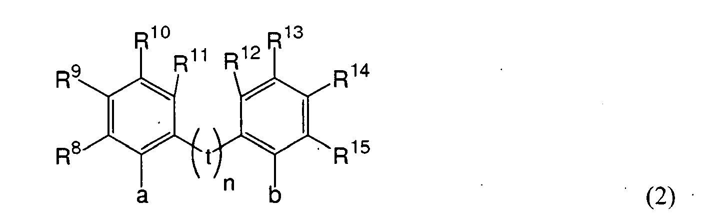 wobei R⁸, R⁹, R¹⁰, R¹¹, R¹², R¹³, R¹⁴ und R¹⁵ jeweils gleich oder verschieden eine der Bedeutungen von q besitzen, bevorzugt unabhängig voneinander für einen einwertigen substituierten öder unsubstituierten aliphatischen, alicyclischen, aromatischen, heteroaromatischen, gemischt aliphatisch-alicyclischen, gemischt aliphatisch-aromatischen, heterocyclischen, gemischt aliphatisch-heterocyclischen Kohlenwasserstoffresten mit 1 bis 50 Kohlenstoffatomen, H, F, Cl, Br, I, -CF₃, -CH₂(CF₂)ⱼCF₃ mit j = 0 - 9, -OR⁵, -COR⁵, -CO₂R⁵, -CO₂M, -SiR⁵₃,-SR⁵, -SO₂R⁵, -SOR⁵, -SO₃R⁵, -SO₃M, -SO₂NR⁵R⁶, -NR⁵R⁶, -N=CR⁵R⁶, wobei R⁵ und R⁶ unabhängig voneinander aus H, einwertigen substituierten oder unsubstituierten aliphatischen und aromatischen Kohlenwasserstoffresten mit 1 bis 25 Kohlenstoffatomen ausgewählt sind und M ein Alkalimetall-, formal ein halbes Erdalkalimetall-, Ammonium- oder Phosphoniumion ist, stehen. t steht für einen Rest CR¹⁶R¹⁷, SiR¹⁶R¹⁷, NR¹⁶, O oder S. R¹⁶ und R¹⁷ sind wie R⁵ oder R⁶ definiert, n steht für 0 oder 1 und die Positionen a und b dienen als Anknüpfpunkte.

Es ist möglich, das je zwei benachbarte Reste R⁸ bis R¹⁵ zusammen ein annelliertes substituiertes oder unsubstituiertes aromatisches, heteroaromatisches, aliphatisches, gemischt aromatisch-aliphatisches oder gemischt heteroaromatisch-aliphatisches Ringsystem ausbilden.

In einem weiteren, im Verfahren einsetzbaren Heteroacylphosphit der Formel (1) besitzt W die Bedeutung der Formel (3) 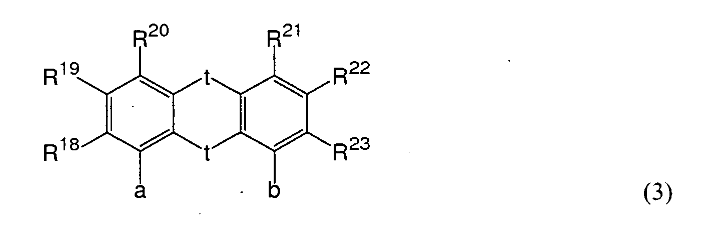 wobei R¹⁸, R¹⁹, R²⁰, R²¹, R²² und R²³ jeweils gleich oder verschieden eine der Bedeutungen von q besitzen, bevorzugt unabhängig voneinander für einen einwertigen, substituierten oder unsubstituierten aliphatischen, alicyclischen, aromatischen, heteroaromatischen, gemischt aliphatisch-alicyclischen, gemischt aliphatisch-aromatischen, heterocyclischen, gemischt aliphatisch-heterocyclischen Kohlenwasserstoffresten mit 1 bis 50 Kohlenstoffatomen, H, F, Cl, Br, I, -CF₃, -CH₂(CF₂)ⱼCF₃ mit j = 0 - 9, -OR⁵, -COR⁵, -CO₂R⁵, -CO₂M, -SiR⁵₃,-SR⁵, -SO₂R⁵, -SOR⁵, -SO₃R⁵, -SO₃M, -SO₂NR⁵R⁶, -NR⁵R⁶, -N=CR⁵R⁶ stehen, wobei R⁵ und R⁶ unabhängig voneinander aus H, einwertigen substituierten oder unsubstituierten aliphatischen und aromatischen Kohlenwasserstoffresten mit 1 bis 25 Kohlenstoffatomen ausgewählt sind und M ein Alkalimetall-, formal ein halbes Erdalkalimetall-, Ammonium- oder Phosphoniumion ist, stehen.

Die Positionen a und b in den Formeln 2 und 3 dienen als Anknüpfpunkte zu dem Rest R und zu z gemäß Formel (1). t steht für einen Rest CR¹⁶R¹⁷, SiR¹⁶R¹⁷, NR¹⁶, O oder S, wobei R¹⁶ und R¹⁷ wie R⁵ oder R⁶ definiert sind.

Es ist möglich, dass je zwei benachbarte Reste R¹⁸ bis R²³ zusammen ein annelliertes substituiertes oder unsubstituiertes aromatisches, heteroaromatisches, aliphatisches, gemischt aromatisch-aliphatisches oder gemischt heteroaromatisch-aliphatisches Ringsystem ausbilden.

Im folgenden werden beispielhaft einige Heteroacylphosphit-Liganden aufgeführt, die in der im erfindungsgemäßen Verfahren eingesetzten Hydroformylierungs-Reaktionsmischung besonders bevorzugt als Organophosphor-Liganden vorhanden sein können, wobei Me für eine Methyl-, ^{t}Bu für eine tertiär-Butyl- und Ph für eine Phenyl-Gruppe steht.

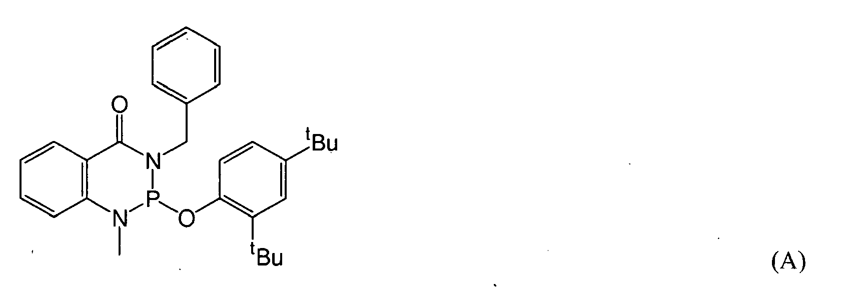

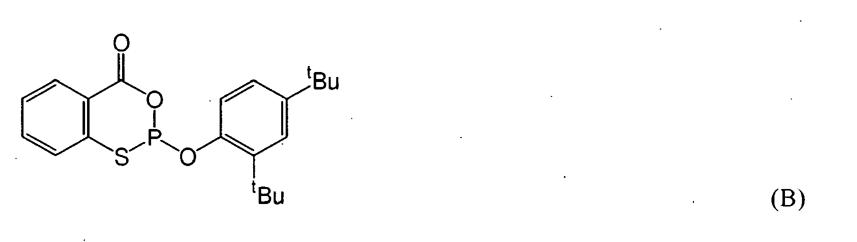

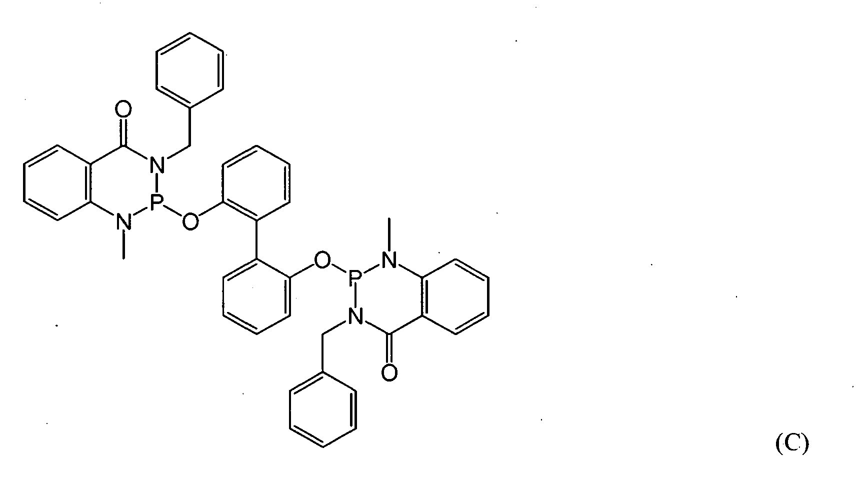

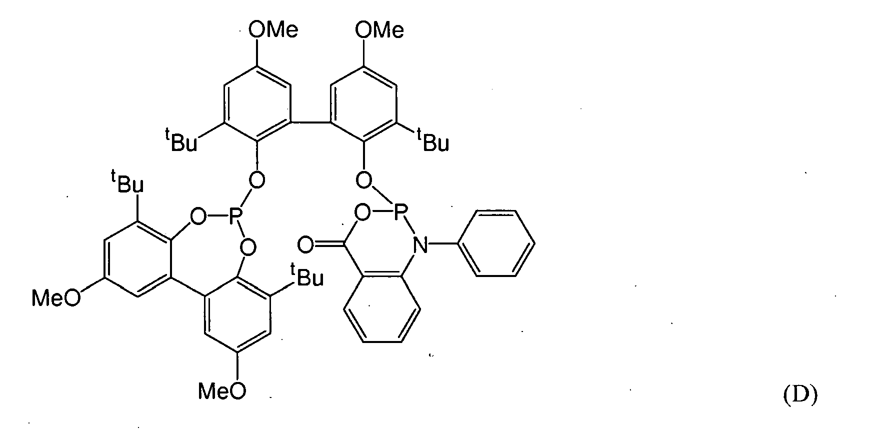

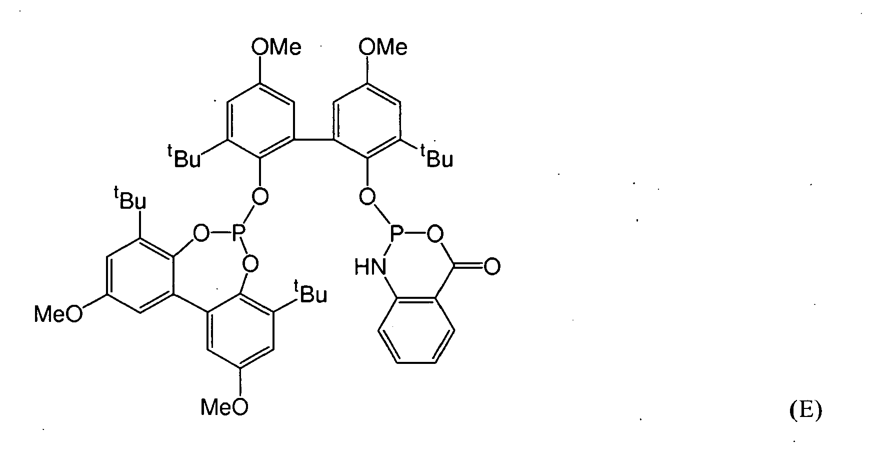

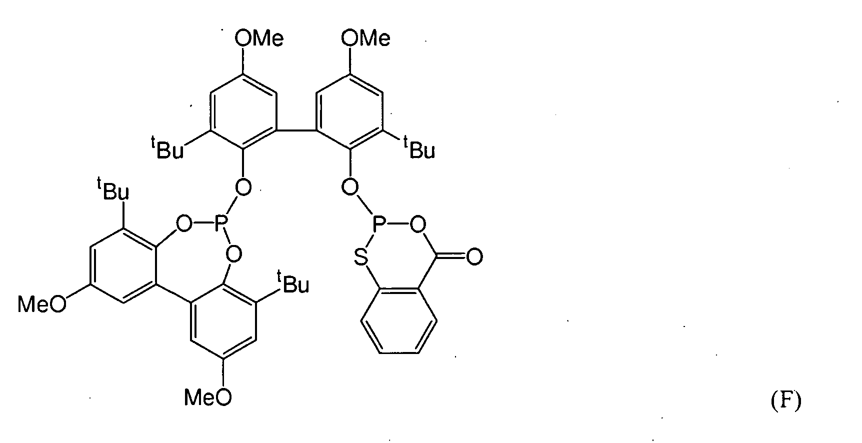

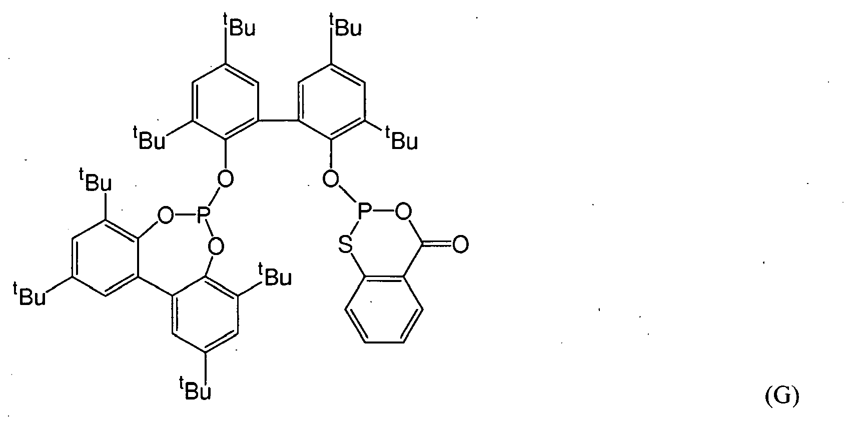

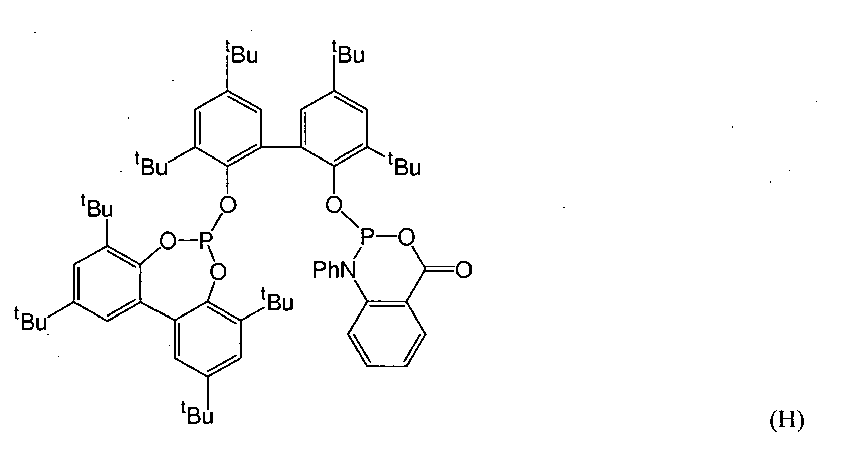

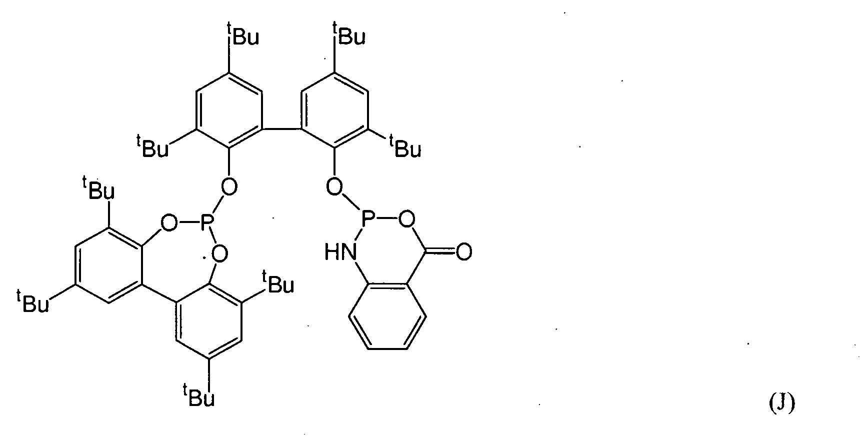

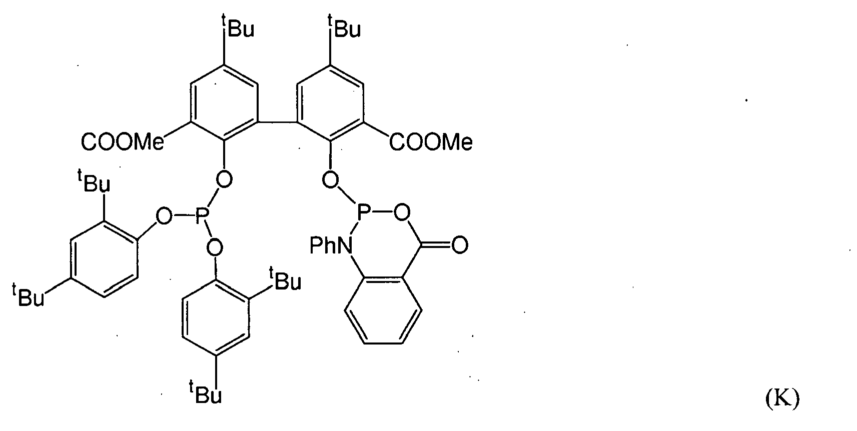

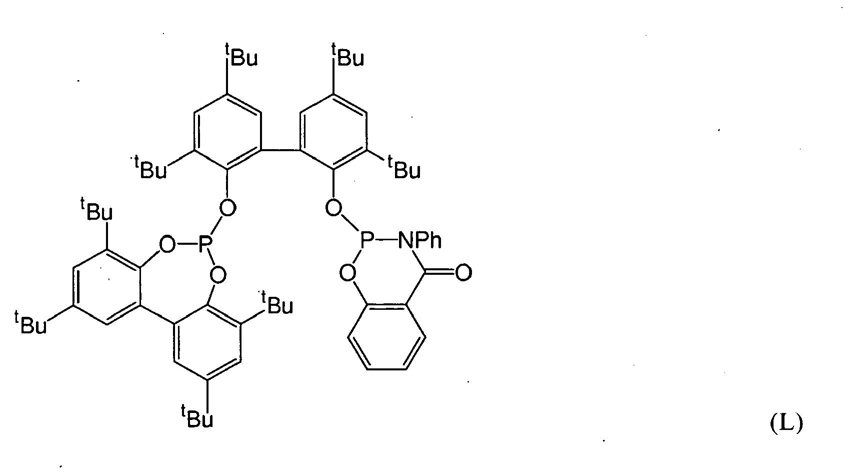

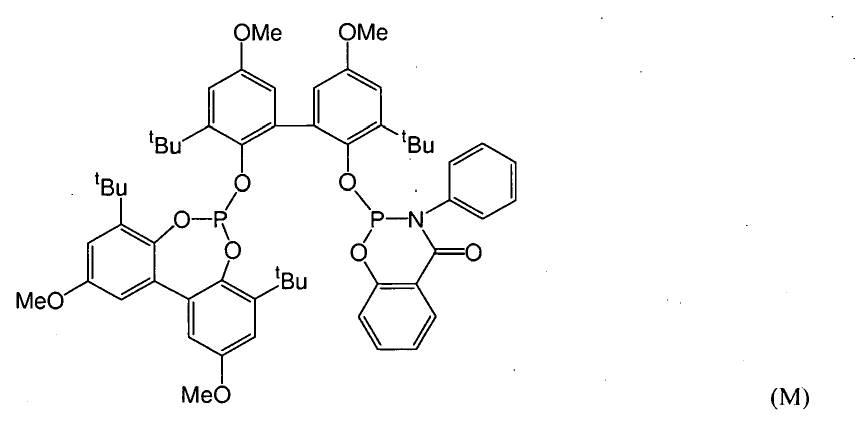

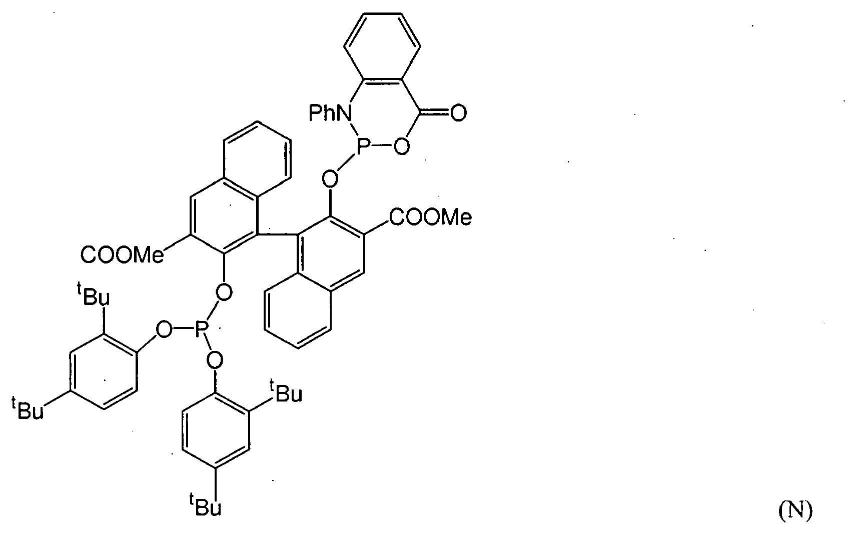

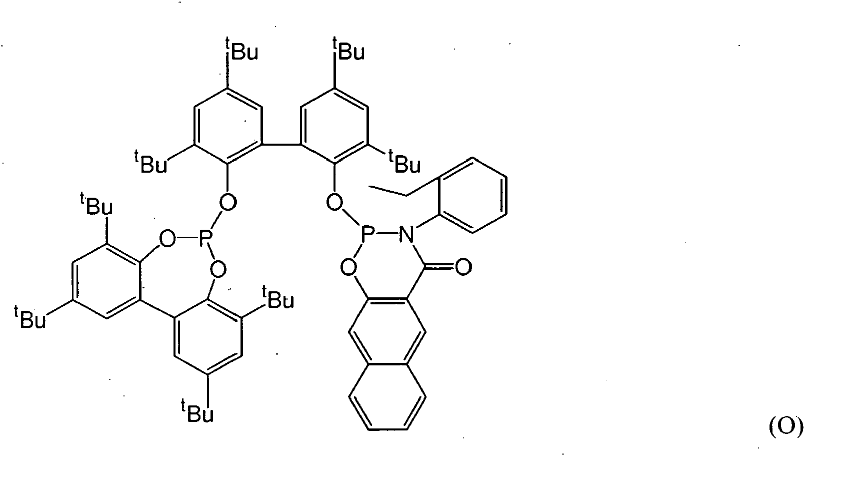

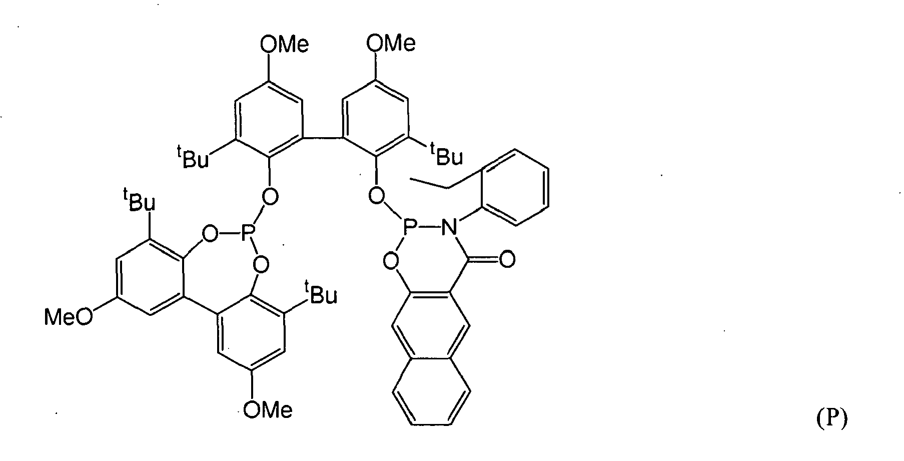

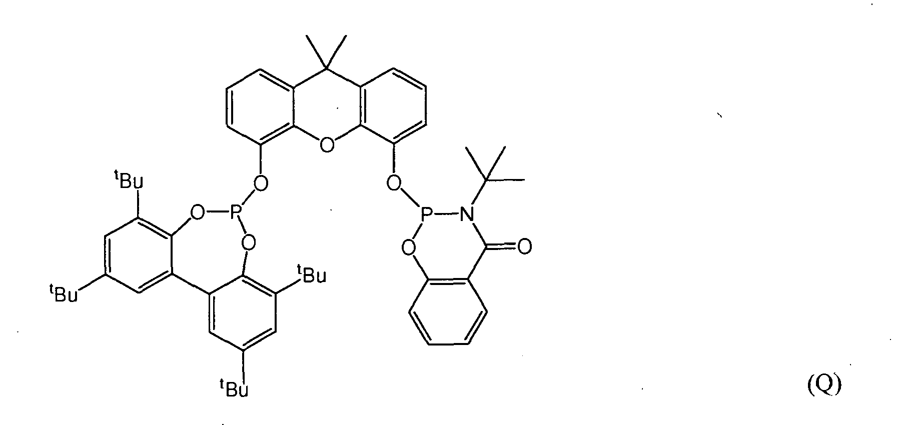

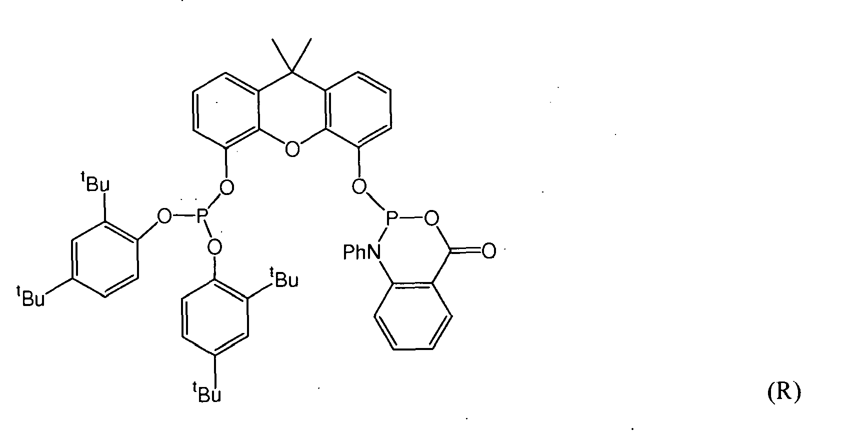

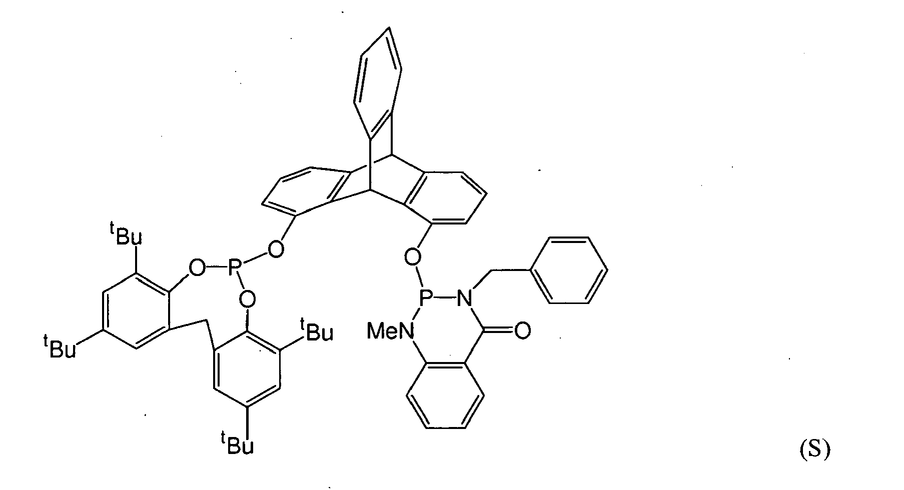

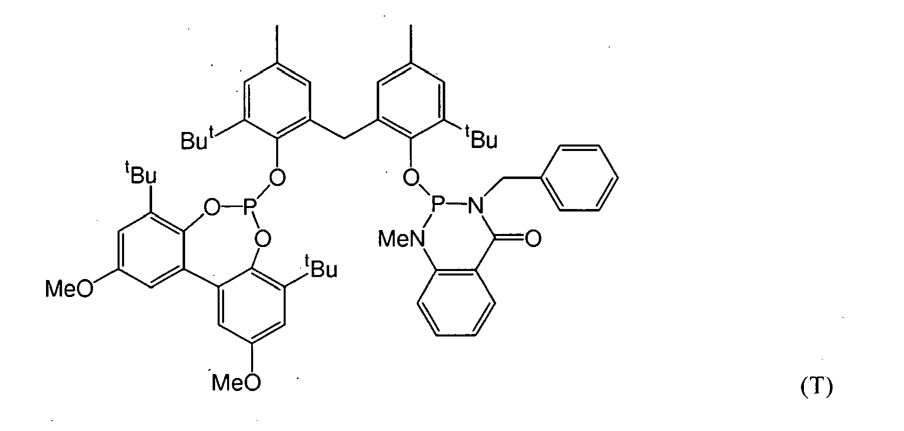

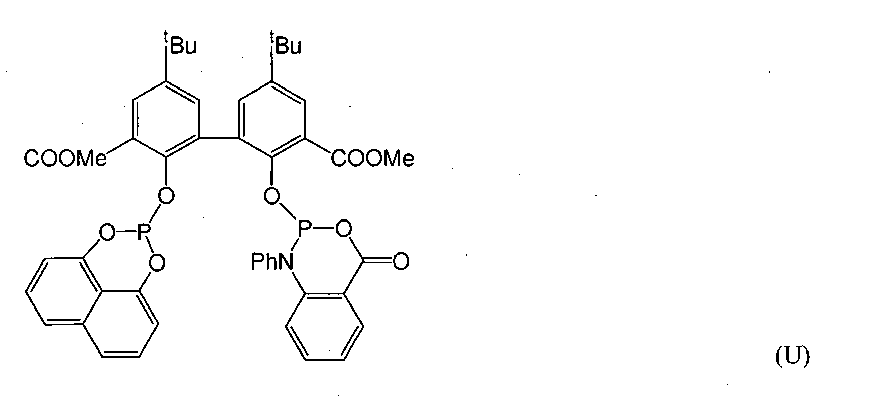

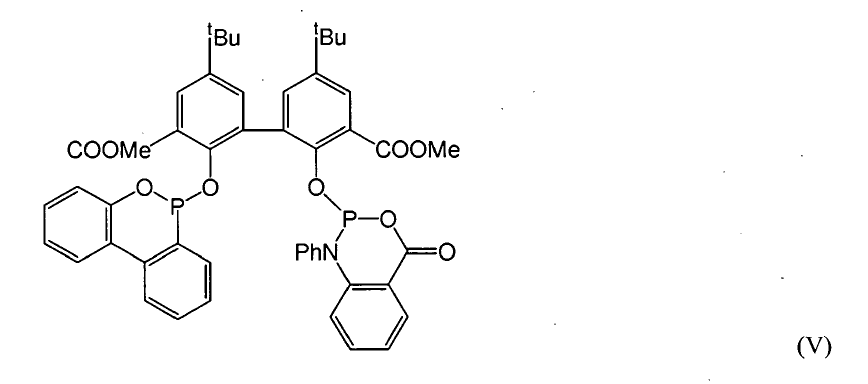

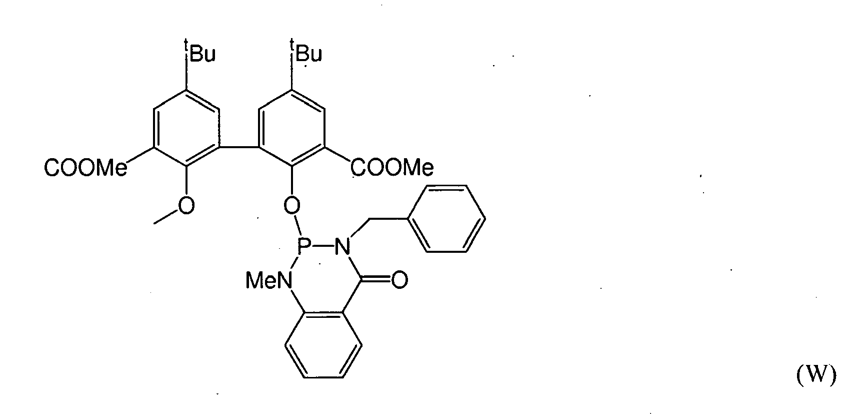

Heteroacylphosphite gemäß Formel (1) können durch eine Folge von Reaktionen von Phosphorhalogeniden mit Alkoholen, Aminen, Thiolen, Carbonsäuren, Carbonsäureamiden, Thiocarbonsäuren, α-Hydroxyarylcarbonsäuren, α-Hydroxyarylcarbonsäureamiden, α-Hydroxyarylthiocarbonsäuren, α-Aminoarylcarbönsäuren, α-Aminoarylcarbonsäureamiden, α-Aminoarylthiocarbonsäuren, α-Mercaptoarylcarbonsäuren, α-Mercaptoarylcarbonsäureamiden und/oder α-Mercaptoarylthiocarbonsäuren, bei denen Halogenatome am Phosphor gegen Sauerstoff-, Stickstoff-, und/oder Schwefelgruppen ausgetauscht werden, hergestellt werden. Das grundsätzliche Vorgehen wird beispielhaft an einem Weg zu Verbindungen gemäß der allgemeinen Formel (1) illustriert:

In einem ersten Schritt wird eine Verbindung der Formel (1a) mit einem Phosphortrihalogenid P(Hal)₃, wie etwa PCl₃, PBr₃ und PJ₃, vorzugsweise Phosphortrichlorid PCl₃, ohne Base oder in Gegenwart einer Base, die in äquivalenten oder katalytischen Mengen eingesetzt wird, zu der Verbindung der Formel (1b) umgesetzt.

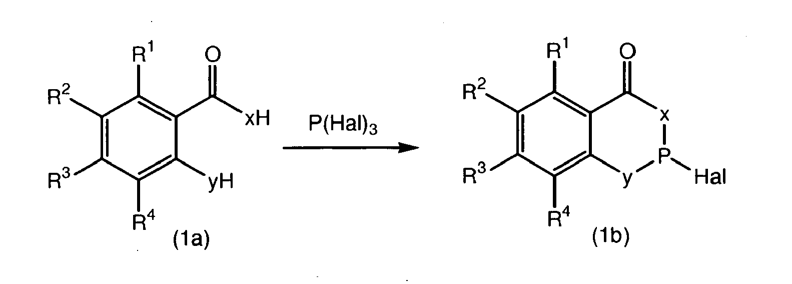

In einem zweiten Reaktionsschritt wird aus der Verbindung (1b) durch Reaktion mit einem Alkohol HO-q oder mit einem Amin HN(R⁷)-q oder mit einem Thiol HS-q ohne Base oder in Gegenwart einer Base, die in äquivalenten oder katalytischen Mengen eingesetzt wird, das gewünschte Heteroacylphosphit gemäß Formel (1) erhalten.

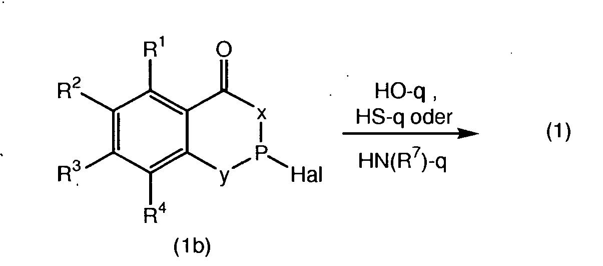

Die Reste R¹ bis R⁴, R⁷ und x, y und q haben die bereits genannten Bedeutungen.

Da die eingesetzten Alkohole, Amine, Thiole bzw. Carbonsäurederivate und ihre Folgeprodukte häufig fest sind, werden die Umsetzungen im Allgemeinen in Lösungsmitteln durchgeführt. Als Solventien werden nicht protische Lösungsmittel, die weder mit den Alkoholen, Aminen, Thiolen bzw. Carbonsäurederivaten noch mit den Phosphorverbindungen reagieren, verwendet. Geeignete Lösungsmittel sind beispielsweise Tetrahydrofuran, Ether wie Diethylether oder MTBE (Methyl-tert.-butylether) oder aromatische Kohlenwasserstoffe wie Toluol.

Bei der Umsetzung von Phosphorhalogeniden mit Alkoholen, Aminen, Thiolen bzw. Carbonsäurederivaten entsteht Halogenwasserstoff, der durch Erhitzen entweicht oder durch zugegebene Basen in äquivalenten oder in katalytischen Mengen gebunden wird. Beispiele für Basen sind tertiäre Amine, wie Triethylamin, Pyridin oder N-Methylpyrrolidon. Teilweise ist es auch sinnvoll, die Alkohole vor der Reaktion in Metallalkoholate zu überführen, zum Beispiel durch Reaktion mit Natriumhydrid oder Butyllithium.

Die eingesetzten Lösemittel müssen weitestgehend wasser- und sauerstofffrei sein, dabei werden Lösemittel mit einem Wassergehalt von 0 bis 500 Massen-ppm bevorzugt, besonders bevorzugt von 0 bis 250 Massen-ppm verwendet. Der Wassergehalt kann beispielsweise durch das Verfahren nach Karl Fischer bestimmt werden.

Die Trocknung des Lösemittels kann durch Destillation des Lösemittels über ein geeignetes Trockenmittel oder durch Durchströmen des Lösemittels durch eine beispielsweise mit Molekularsieb 4 Å gefüllte Kartusche oder Säule geschehen.

Die Syntheseschritte laufen vorzugsweise bei Temperaturen von -80 °C bis 150 °C ab; in den meisten Fällen hat es sich bewährt, bei Temperaturen von -20 °C bis 110 °C, besonders bevorzugt bei 0 °C bis 80 °C, zu arbeiten.

Als Metall kann der in der erfindungsgemäß eingesetzten Hydroformylierungs-Reaktionsmischung vorhandene Komplexkatalysator ein Metall der 4., 5., 6., 7., 8., 9. oder 10. Gruppe des Periodensystems der Elemente aufweisen. Beispiele für besonders geeignete Metalle sind Rhodium, Kobalt, Iridium, Nickel, Palladium, Platin, Eisen, Ruthenium, Osmium, Chrom, Molybdän und Wolfram. Besonders bevorzugt weist der Metallkomplex-Katalysator Rhodium als Metall auf.

Die Katalysatormetalle können in Form von Salzen oder Komplexen in die Hydroformylierungsreaktion eingebracht werden, im Falle von Rhodium sind z. B. Rhodiumcarbonyle, Rhodiumnitrat, Rhodiumchlorid, Rh(CO)₂(acac) (acac = Acetylacetonat), Rhodiumacetat, Rhodiumoctanoat oder Rhodiumnonanoat geeignet.

Aus den Organophosphor-Liganden und dem Katalysatormetall bildet sich unter den Reaktionsbedingungen der Hydroformylierung die aktive Katalysatorspezies. Bei der Hydroformylierung wird bei Kontakt mit Synthesegas ein Carbonylhydrid-Organophosphor-Ligand-Metallkomplex gebildet. Die Organophosphor-Liganden und gegebenenfalls weitere Liganden können in freier Form zusammen mit dem Katalysatormetall (als Salz oder Komplex) in die Reaktionsmischung gegeben werden, um die aktive Katalysatorspezies in situ zu erzeugen. Es ist weiterhin auch möglich, einen Organophosphor-Ligand-Metallkomplex, der die o. g. Organophosphor-Liganden und das Katalysatormetall enthält, als Precursor für den eigentlichen katalytisch aktiven Komplex einzusetzen. Diese Organophosphor-Ligand-Metallkomplexe werden hergestellt, indem man das entsprechende Katalysatormetall der 4. bis 10. Gruppe in Form einer chemischen Verbindung mit dem Organophosphor-Liganden umsetzt. Die Organophosphor-Liganden werden vorzugsweise im Überschuss eingesetzt, so dass in der im erfindungsgemäßen Verfahren eingesetzten Hydroformylierungs-Reaktionsmischung Organophosphor-Liganden als freie Liganden vorhanden sind.

Die Hydroformylierungs-Reaktionsmischung stammt vorzugsweise aus einem Hydroformylierungsverfahren, bei dem 1 bis 500 mol, bevorzugt 1 bis 200 mol und besonders bevorzugt 2 bis 50 mol Organophosphor-Liganden pro mol Metall der 4. bis 10. Gruppe des Periodensystems eingesetzt werden. Frische Organophosphor-Liganden können zu jedem Zeitpunkt der Hydroformylierungsreaktion zugesetzt werden, um die Konzentration an freiem Heteroacylphosphit, d. h. nicht am Metall koordiniert, konstant zu halten.

Die Konzentration des Metalls in der Hydroformylierungs-Reaktionsmischung liegt vorzugsweise im Bereich von 1 ppm bis 1000 ppm, bevorzugt im Bereich von 5 ppm bis 300 ppm, bezogen auf das Gesamtgewicht der Hydroformlylierungs-Reaktionsmischung.

Das molare Verhältnis von Hydroformylierungsprodukt, insbesondere Aldehydprodukt zu freiem Ligand im Zustrom zur Membran, insbesondere im Zustrom zum ersten Membrantrennschritt beträgt vorzugsweise mehr als 10 zu 1 beträgt.

Die mit den Organophosphor-Liganden bzw. den entsprechenden Metallkomplexen durchgeführten Hydroformylierungsreaktionen können nach bekannten Vorschriften, wie z. B. in J. FALBE, "New Syntheses with Carbon Monoxide", Springer Verlag, Berlin, Heidelberg, New York, Seite 95 ff., (1980) beschrieben, durchgeführt werden. Die Olefinverbindung(en) wird (werden) in Gegenwart des Katalysators mit einem Gemisch aus CO und H₂ (Synthesegas) zu den um ein C-Atom reicheren Aldehyden umgesetzt.

Die Reaktionstemperaturen betragen vorzugsweise von 40 °C bis 180 °C und bevorzugt von 75 °C bis 140 °C. Bei der Hydroformylierung betragen die Synthesegasdrücke 0,1 bis 30 MPa, vorzugsweise 1 bis 6,4 MPa. Das Molverhältnis zwischen Wasserstoff und Kohlenmonoxid (H₂/CO) im Synthesegas beträgt vorzugsweise von 10/1 bis 1/10 und bevorzugt von 1/1 bis 2/1.

Der Katalysator bzw. der Ligand ist vorzugsweise homogen in der Hydroformylierungs-Reaktionsmischung, bestehend aus Edukten (Olefinen und Synthesegas) und Produkten (Aldehyden, Alkoholen, im Prozess gebildete Hochsieder), gelöst. Zusätzlich kann ein Lösungsmittel vorhanden sein, wobei das Lösemittel auch ausgewählt sein kann aus den Edukten (Olefine) oder Produkten (Aldehyde) der Reaktion. Weitere mögliche Lösemittel sind organische Verbindungen, die die Hydroformylierungsreaktion nicht stören und vorzugsweise leicht, z. B. durch Destillation oder Extraktion, wieder abgetrennt werden können. Solche Lösemittel können z. B. Kohlenwasserstoffe, wie z. B. Toluol sein.

Die Edukte für die Hydroformylierung können Olefine oder Gemische von Olefinen mit 2 bis 25 Kohlenstoffatomen mit end- oder innenständiger C=C-Doppelbindung sein. Bevorzugte Edukte sind allgemein α-Olefine wie Propen, 1-Buten, 2-Buten, 1-Hexen, 1-Octen sowie Dimere und Trimere des Butens (Isomerengemische), insbesondere Dibuten und Tributen.

Es kann vorteilhaft sein, wenn im Hydroformylierungs-Reaktionsgemisch Verbindungen mit stabilisierenden Eigenschaften, insbesondere mit stabilisierenden Eigenschaften bezüglich der Stabilität der Liganden oder des Komplex-Katalysators vorhanden sind. Solche als Stabilisator einsetzbare Verbindungen können z. B. sterisch gehinderte Amine, wie sie z. B. in WO 2005/039762 beschrieben werden, insbesondere sterisch gehinderte sekundäre Amine sein, wie sie z. B. in DE 10 2005 042 464 beschrieben werden, sein.

Die Hydroformylierung kann kontinuierlich oder diskontinuierlich durchgeführt werden. Beispiele für technische Ausführungen sind Rührkessel, Blasensäulen, Strahldüsenreaktoren, Rohrreaktoren, oder Schlaufenreaktoren, die zum Teil kaskadiert und/oder mit Einbauten versehen sein können. Die Reaktion kann in einer oder in mehreren Stufe(n) erfolgen.

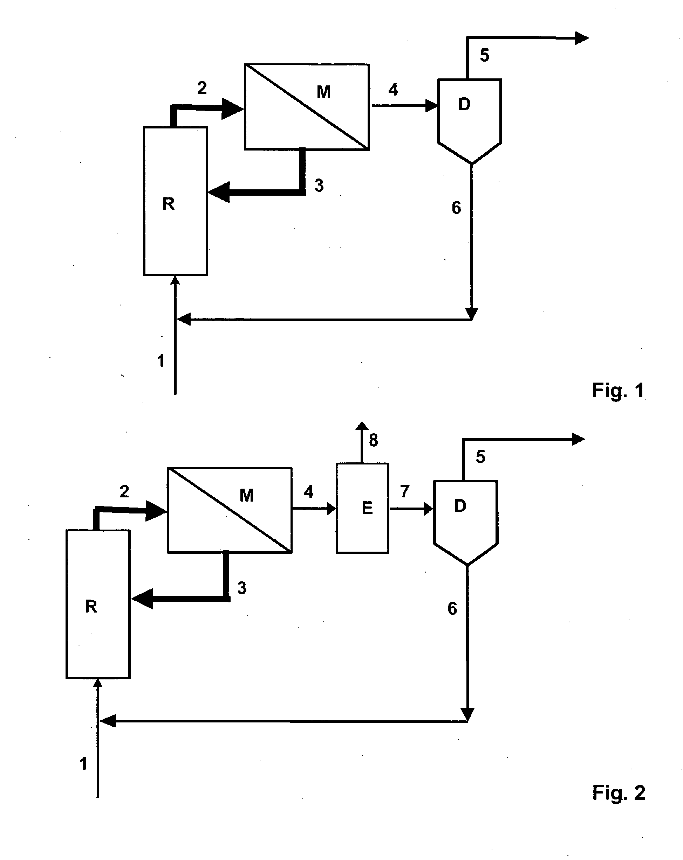

Die vorliegende Erfindung wird an Hand der Figuren Fig. 1, Fig.2 und Fig. 3 beispielhaft beschrieben, ohne dass die Erfindung auf diese Ausführungsformen beschränkt sein soll.

In Fig. 1 ist eine schematische Abbildung einer Ausführungsform des erfindungsgemäßen Verfahrens dargestellt. Bei dieser Ausführungsform werden die Reaktanden 1 und ein Rückführstrom 6 in den Reaktor R eingespeist, in dem die Hydroformylierung stattfindet. Die Hydroformylierungs-Reaktionsmischung 2 wird direkt auf die Membran M des Membrantrennschritts geführt. Der an der Membran erhaltene Retentatstrom 3 wird in die Reaktion zurückgeführt. Der an der Membran M erhaltene Permeatstrom 4 wird in eine thermische Trennvorrichtung D, z. B. in einen Dünnschichtverdampfer, geführt. In diesem erfolgt eine Auftrennung in Hydroformylierungsprodukt und gegebenenfalls nicht umgesetzte Olefine, die als Strom 5 die thermischen Trennvorrichtung verlassen, und einen Strom 6, der Hochsieder und in der Membranabtrennung nicht abgetrennten Komplexkatalysator und/oder freien Liganden enthält und in den Reaktor R zurückgeführt wird.

In Fig. 2 ist eine Ausführungsförm des erfindungsgemäßen Verfahrens dargestellt. Diese Ausführungsform entspricht im Wesentlichen der in Fig. 1 dargestellten. Zusätzlich ist eine Entgasung E vorhanden, in welcher der Permeatstrom 4, üblicherweise durch Entspannung, von gasförmigen Inhaltsstoffen 8, wie z. B. Kohlenmonoxid und Wasserstoff, befreit wird, die einer Aufarbeitung zugeführt oder in den Reaktor zurückgeführt werden können. Der verbleibende flüssige Teil 7 des Permeatstroms wird dann wie gehabt in die thermische Trennvorrichtung geführt.

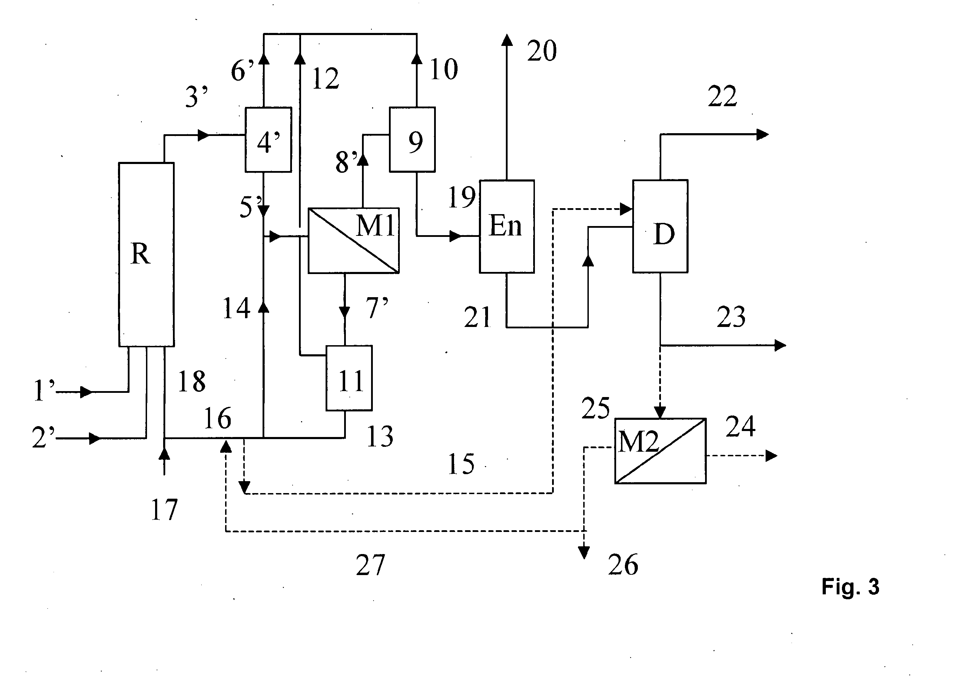

In Fig. 3 ist eine weitere Ausführungsförm des erfindungsgemäßen Verfahrens dargestellt. Das Edukt 1' (Olefin oder Olefingemisch), Synthesegas 2' und Katalysatorlösung 18 werden in den Hydroformylierungsreaktor R geleitet. Der Hydroformylierungsaustrag 3' wird im Behälter 4' in eine Gasphase 6' und ein Flüssigphase 5' getrennt. Die Flüssigphase, in der abhängig vom Kohlenmonoxiddampfdruck in der Gasphase 6' eine bestimmte Menge Kohlenmonoxid gelöst ist, wird zusammen mit Strom 14 mittels einer Pumpe, die auch den transmembranen Druck erzeugt, in die Membraneinheit M1 gefördert. Vom Retentat 7' im Sammelbehälter 11 wird gegebenenfalls eine Gasphase 12 abgetrennt. Ein Teil 14 des Retentats wird zur Einstellung der Überströmgeschwindigkeit und/oder der Zulaufkonzentration des Katalysators in die Membraneinheit M1 zurückgefahren. Der andere Teil des Retentats (Katalysatorrückstrom) wird gegebenenfalls nach Ausschleusung einer Teilmenge 15 und Ergänzung mit Frischkatalysator 17 als Strom 18 in den Hydroformylierungsreaktor gefahren. Wenn die Anlage mit einer zweiten Membraneinheit betrieben wird, enthält Strom 18 zusätzlich Strom 27. Das Permeat 8' im Sammelbehälter 9 kann gegebenenfalls in eine Gasphase 10 und eine Flüssigphase 19 getrennt werden. Der Strom 19 kann in einer Entspannungseinheit En in einen Leichtsiederstrom 20, der ganz oder teilweise über eine nicht dargestellte Leitung in den Reaktor R eingeleitet werden kann, und in eine flüssige Phase 21 getrennt werden. Die flüssige Phase 21 wird in einen Dünnschichtverdampfer D geleitet. Dort erfolgt die Trennung in ein Destillat 22, das nicht umgesetztes Edukt und die Wertprodukte enthält, und in ein Sumpfprodukt 23 mit Hochsieder und gegebenenfalls Katalysator und dessen Folgeprodukte. Die weitere Aufarbeitung des Destillats 22 erfolgt in einer nicht dargestellten Destillationsanlage. Bei einer Anlage ohne die Entspannungseinrichtung En wird Strom 19 anstelle von Strom 21 in den Dünnschichtverdampfer D geleitet. Strom 23 wird an der Membran M2 in einen Permeatstrom 24, der praktisch Rhodium-frei ist und ausgeschleust wird, und in einen Rhodium-haltigen Permeatstrom getrennt, der gegebenenfalls nach Ausschleusung einer Teilmenge 26 in den Katalysatorrückstrom 16 eingeleitet wird. Bei Anlagen ohne eine zweite Membrantrennstufe M2 wird der Hochsieder 23 ausgeschleust. Optional kann eine Teilmenge davon über eine nicht gezeichnete Leitung in den Reaktor R zurückgeführt werden. Die Abgasströme 6', 10 und 12 können getrennt oder gemeinsam nach Kompression ganz oder teilweise in den Reaktor R zurückgeführt werden (Leitungen nicht gezeichnet).

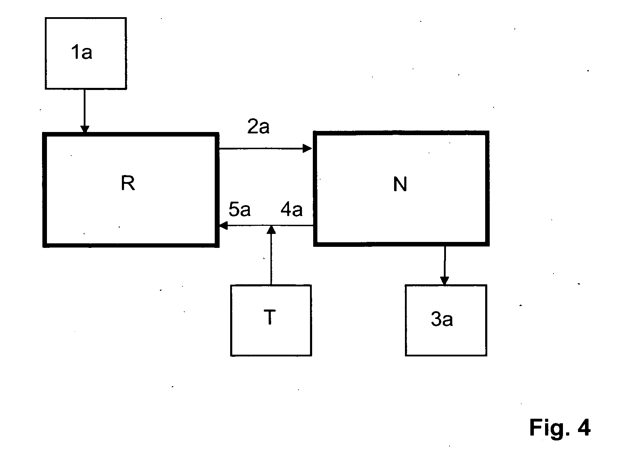

In Fig. 4 ist die Prozessführung gemäß Beispiel 1 schematisch dargestellt. Der Prozess besteht aus einer Reaktion in Reaktor R und einer Nanofiltration N. Für die erste Reaktion wird das Eduktgemisch 1a, welches Olefin, Rhodiumverbindung und Ligand enthält, im Reaktor R vorgelegt und umgesetzt. Das Reaktionsprodukt 2a wird in die Nanofiltration N überführt. Aus der Nanofiltration wird an der Membran das Permeat 3a erhalten, das vorwiegend aus Reaktionsprodukt besteht. Das bei der Nanofiltration anfallende Retentat 4a, welches den Katalysator sowie den Liganden enthält, wird mit frischem Olefin T vermischt. Dieses Gemisch 5a wird dem Reaktor R wieder zugeführt.

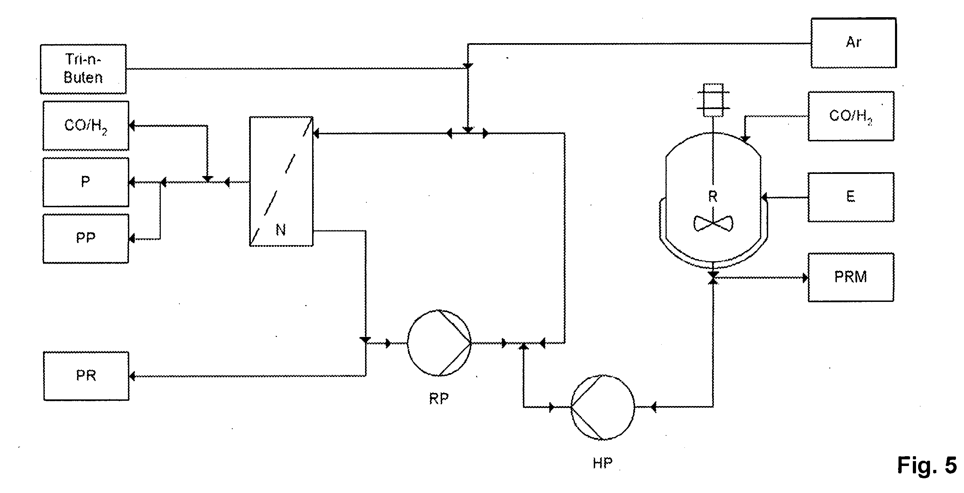

In Fig. 5 ist die in den Beispielen 1 und 2 verwendete Versuchsanlage dargestellt. Die Versuchsanlage besteht aus einem Reaktor R und einer Nanofiltration N. Dem Reaktor R, der mit einem Rührer ausgestattet ist, können das Edukte E, sowie Synthesegas CO/H₂ zugeführt werden. Am Reaktorausgang kann eine Probe PRM zur Analyse der erhaltenen Reaktionsmischung genommen werden. Mittels einer Hochdruckpumpe HP wird das Reaktionsgemisch einem Kreislauf zugeführt, der in die Nanofiltration N führt. Die Rezirkulationspumpe RP sorgt für die nötige Überströmung der Membran. Permeatseitig wird aus der Nanofiltration das Permeat P abgezogen. In der Ablaufleitung für das Permeat P ist eine Probenentnahmemöglichkeit zur Entnahme einer Probe des Permeats PP vorhanden. Außerdem ist in der Ablaufleitung ein Anschluss vorgesehen, mit dem permeatseitig Synthesegas (CO/H₂) zugeführt oder abgeführt werden kann, wodurch der Druck auf der Permeatseite eingestellt werden kann. In der Ablaufleitung des Retentats aus der Nanofiltration ist eine Probenentnahmevorrichtung vorhanden, mit welcher eine Probe des Retentats PR zu Analysezwecken entnommen werden kann. Vor dem Zulauf zur Nanofiltration ist im Kreislauf ein Zulauf vorgesehen, über den Tri-n-Buten mit Hilfe von Argongasdruck Ar zugegeben und mit Retentat vermischt in den Reaktor R zurückgeführt werden kann.

Die folgenden Beispiele sollen die Erfindung näher erläutern, ohne den Schutzbereich einzuschränken, der sich aus den Patentansprüchen und der Beschreibung ergibt.

### Beispiel 1, erfindungsgemäß

In einer wie in Fig. 5 dargestellten Versuchsanlage wurden Hydroformylierungsreaktionen von Tri-n-Buten mit Synthesegas zu Isotridecanal durchgeführt. Anschließend erfolgte eine Abtrennung des Katalysator-Ligandsystems mittels Nanofiltration zur Wiedereinsetzung in der darauf folgenden Hydroformylierungsreaktion. Beide Prozessschritte wurden Satzweise nacheinander durchgeführt. In Fig. 4 ist die Prozessführung schematisch dargestellt. Insgesamt wurden in einer Prozessabfolge vier Hydroformylierungen und drei Nanofiltrationsschritte abwechselnd durchgeführt.

Für die erste Reaktion wurde in dem Reaktor das Edukt (1a) unter Sauerstoffausschluss mit folgender Zusammensetzung vorgelegt:
- 996 g Tri-n-Buten (OXENO Olefinchemie GmbH)
- 8,72 mg Rh (als Rhodiumnonanat, (Rhodiumalkoholat des Nonanols)
- 297 mg Alkanox 240 (Tris(2,4-di-tert-butylphenyl)phosphit)) als Ligand (Great Lakes Chemical Corp.)

Nach der Reaktion über 4 Stunden unter 260 bar Synthesegasdruck (CO/H₂, Massenverhältnis 1:1), bei 150°C wurde das Reaktionsproduktgemisch nach Abkühlung auf 60 °C und Entgasung auf 17 bar mit dem gelösten Katalysatorsystem zur Nanofiltrationsanlage (N) überführt. Hierbei handelte es sich um eine Einheit, die über eine Hochdruckpumpe gespeist wird und die den benötigten transmembranen Druck im System aufbaut. Von dort gelangte das zu filtrierende Medium über eine Rezirkulationspumpe in das Membranmodul "Memcell" der Firma Osmota mit einer Fläche von 80 cm². In diesem Modul war eine Membran des Typs Starmem 240 der Firma Grace Davison eingebaut, die unter einem transmembranen Druck von 25 bar mit 1,3 m/s überströmt wurde. Zur Stabilisierung des Katalysator-Ligandkomplexes wurde auf der Permeatseite ein Synthesegasdruck (CO/H₂, Massenverhältnis 1:1) von 17 bar gehalten, wodurch bei einem transmembranen Druck von 25 bar auf der Retentatseite 42 bar eingestellt wurde.

Während der Nanofiltration wurde dem System über die Membran Permeat (3a), das vorwiegend aus Reaktionsprodukt bestand, entnommen. Der Katalysator sowie der Ligand Alkanox wurden im Rahmen dieses Feed-Batch-Prozesses von der Membran weitestgehend zurückgehalten und reicherten sich im Retentatraum an. Nachdem das gesamte Reaktionsprodukt in die Nanofiltrationsanlage überführt und um den volumetrischen Konzentrierungsfaktor von ca. 5 angereichert war, wurde das erhaltene Konzentrat (4a), welches den im System verbliebenen Katalysator-Ligand-Komplex enthielt, mit frischem Edukt (T) (Tributen) gemischt und dieses Gemisch (5) in den Reaktionskessel zurückgeführt. Nach der erneuten Reaktion über 4 Stunden unter 260 bar Synthesegasdruck (CO/H₂, Massenverhältnis 1:1), bei 150 °C wurde das Reaktionsproduktgemisch (2) nach Abkühlung auf 60 °C und Entgasung auf 17 bar Synthesegasdruck wieder mit dem gelösten Katalysatorsystem zur Nanofiltrationsanlage überführt (N). Insgesamt wurden auf diese Weise abwechselnd vier Batch-Reaktionen und drei Nanofiltrationszyklen durchgeführt. Figur 5 zeigt den Versuchsaufbau.

Die Prozesskette wurde an Hand von Mess- und Analysendaten, die durch gaschromatographische Analyse, HPLC-Analyse, Atomabsorptionsspektroskopie und Optische Emissionsspektrometrie mit induktiv gekoppeltem Hochfrequenzplasma erhalten wurden, ausgewertet. Die Reaktionen wurden hinsichtlich des Umsatzes an Tri-n-Buten sowie der Ausbeute und der Selektivität an Isotridecanal untersucht. Die Nanofiltration wurde hinsichtlich Permeatfluss und Rückhalt für Rhodium und Ligand untersucht. Tabelle 1 zeigt die Ergebnisse der Versuche gemäß Beispiel 1.

**Tabelle 1: Ergebnisse Beispiel 1**

| Verfahrensschritt | Strombezeichnung | Einsatzmasse, Massenanteil Hauptkomponenten w [-], Rh [mg] Ligand [mg] | Probenmasse gesamt [g] Umsatz (U) Selektivität (S) Rückhalt (R) |
|---|---|---|---|
| HF I, Start | Einsatzstoff (ohne Synthesegas) | 996,0 g Einsatzmasse 1,00 Tri-n-Buten 0,00 Isotridecanal 0,00 Isotridecanol 0,00 sonstige Stoffe 8,72 mg Rh 297 mg Ligand | Probenmasse: 49,8 g, davon Rh: 0,4 mg |
| HF I, Ende (=Start NF I) | Flüssiger HF-Austrag I (zur NF I) | 1095,0 g Gesamtmasse 0,12 Tri-n-Buten 0,78 Isotridecanal 0,09 Isotridecanol 0,00 sonstige Stoffe 8,32 mg Rh* 285 mg Ligand | Probenmasse: 17,3 g, davon Rh: 0,14 mg U, TnB: 0,85 S, ITDA: 0,90 |
| NF I | Permeataustrag I | 939,5 g Permeatmasse 0,16 Tri-n-Buten 0,74 Isotridecanal 0,09 Isotridecanol | |
| | | 0,00 sonstige Stoffe 0,53 mg Rh 3,0 mg Ligand | |
| NF I | Retentat I | 155,5 g Retentatmasse 7,65 mg Rh* 282 mg Ligand | R, Rh: 0,94 R, Ligand: 0,96 |
| HF II | Einsatzstoff II | 925,5 g Gesamtmasse 0,84 Tri-n-Buten 0,13 Isotridecanal 0,02 Isotridecanol 0,00 sonstige Stoffe 7,65 mg Rh* 282 mg Ligand | Probenmasse: 46,8 g, davon Rh: 0,39 mg |
| HF II | Flüssiger HF-Austrag II (zur NF II) | 992,7 g Gesamtmasse 0,10 Tri-n-Buten 0,77 Isotridecanal 0,05 Isotridecanol 0,00 sonstige Stoffe 7,26 mg Rh* 271 mg Ligand | Probenmasse: 16,6 g, davon Rh: 0,12 mg U, TnB: 0,85 S, ITDA: 0,96 |
| NF II | Permeataustrag II | 819,3 g Permeatmasse 0,21 Tri-n-Buten 0,73 Isotridecanal 0,05 Isotridecanol 0,01 sonstige Stoffe 0,66 mg Rh 3,27 mg Ligand | |
| NF II | Retentat II | 156,8 g Retentatmasse 6,49 mg Rh* 268 mg Ligand | R, Rh: 0,91 R, Ligand: 0,98 |
| HF III | Einsatzstoff III | 934,7 g Gesamtmasse 0,90 Tri-n-Buten | Probenmasse: 51,2 g, davon Rh: 0,31 mg |
| | | 0,09 Isotridecanal | |
| | | 0,01 Isotridecanol | |
| | | 0,00 sonstige Stoffe | |
| | | 6,49 mg Rh* | |
| | | 268 mg Ligand | |
| HF III | Flüssiger HF-Austrag III (zur NF III) | 979,4 g Gesamtmasse | Probenmasse: 17,3 g, |
| | | 0,27 Tri-n-Buten | davon Rh: 0,11 mg |
| | | 0,70 Isotridecanal | U, TnB: 0,67 |
| | | 0,02 Isotridecanol | S, ITDA: 0,97 |
| | | 0,00 sonstige Stoffe | |
| | | 6,18 mg Rh* | |
| | | 258 mg Ligand | |
| NF III | Permeataustrag III | 751,3 g Permeatmasse | |
| | | 0,27 Tri-n-Buten | |
| | | 0,69 Isotridecanal | |
| | | 0,03 Isotridecanol | |
| | | 0,01 sonstige Stoffe | |
| | | 0,50 mg Rh | |
| | | 1,5 mg Ligand | |
| NF III | Retentat III | 210,8 g Retentatmasse | R, Rh: 0,91 |
| | | 5,57 mg Rh* | R, Ligand: 0,99 |
| | | 256 mg Ligand | |
| HF IV | Einsatzstoff IV | 932,3 g Gesamtmasse | Probenmasse: 49,7 g, |
| | | 0,87 Tri-n-Buten | davon Rh: 0,30 mg |
| | | 0,12 Isotridecanal | |
| | | 0,01 Isotridecanol | |
| | | 0,00 sonstige Stoffe | |
| | | 5,57 mg Rh* | |
| | | 256 mg Ligand | |
| HF IV | Flüssiger HF-Austrag IV (Endprodukt) | 969,3 g Gesamtmasse | U, TnB: 0,62 |
| | | 0,30 Tri-n-Buten | S, ITDA: 0,98 |
| | | 0,68 Isotridecanal | |
| | | 0,02 Isotridecanol | |
| | | 0,00 sonstige Stoffe | |
| | | 5,14 mg Rh | |
| | | (5,27 mg Rh*, berechnet) | |
| | | 247 mg Ligand | |

| | | | |
|---|---|---|---|
| Anmerkungen: Die mit * gekennzeichneten Werte sind aus der Bilanz errechnet. TnB steht für Tri-n-Buten, ITDA steht für Isotridecanal, HF steht für Hydroformylierung und NF für Nanofiltration. | | | |

Die Nanofiltration zeigte bei spezifischen Permeatflussleistungen zwischen 4 und 6 [kg/m²h] gegenüber dem Rhodium einen Membranrückhalt zwischen 70 und 80 % am Anfang der Konzentrierung und 95 und 98 % am Ende der Konzentrierung. Die Reaktionen nach den jeweiligen Filtrationsprozessen mit dem rückgeführten Katalysator zeigten eine der Rhodium-Konzentration entsprechenden Aktivität.

Die Bilanz über die gesamte Prozesskette zeigte, dass 19,2 % der ursprünglich eingesetzten Rhodiummasse von 8,72 mg dem System über das Permeat entzogen wurden. Zusätzlich ging Rhodium über die Probenentnahme in Höhe von insgesamt 20,3 % verloren. Am Ende der Prozesskette mussten gemäß der Bilanz noch 60,5 % des ursprünglich eingesetzten Rhodiums entsprechend 5,27 mg im Reaktor vorhanden sein. Tatsächlich gefunden wurden 5,14 mg. Demnach sind ca. 1,5 % des eingesetzten Rhodiums durch Verclusterung dem System als aktiver Katalysator verloren gegangen.

Das Beispiel zeigt, dass der Katalysator unter den gewählten Bedingungen in aktiver Form mit einer Nanofiltration zurückgehalten werden kann.

### Beispiel 2 (Vergleichsbeispiel)

In einem weiteren Versuch wurde analog zu Beispiel 1 vorgegangen. Für die erste Reaktion in diesem Beispiel wurde folgendes Edukt vorgelegt:
- 1023,6 g Tri-n-Buten
- 8,75 mg Rh (Rhodiumnonanat)
- 291 mg Alkanox 240 (Tris(2,4-di-tert-butylphenyl)phosphit))

Nach der Reaktion über 4 Stunden, erneut unter 260 bar Synthesegasdruck (CO/H₂, Massenverhältnis 1:1), bei 150 °C wurde das Reaktionsproduktgemisch nach Abkühlung auf 60 °C und CO-Entgasung mit dem gelösten Katalysatorsystem zur Nanofiltrationsanlage überführt. Zur Stabilisierung des Katalysator-Ligandkomplexes wurde auf der Permeatseite in diesem Versuch kein Synthesegasdruck (CO/H₂, Massenverhältnis 1 : 1) von 17 bar gehalten, weshalb bei einem transmembranen Druck von 25 bar auf der Retentatseite 25 bar eingestellt wurde. Das Permeat konnte drucklos ablaufen.

Nachdem das gesamte Reaktionsprodukt in die Nanofiltrationsanlage überführt und um den volumetrischen Konzentrierungsfaktor 5 angereichert war, wurde das erhaltene Konzentrat mit frischem Edukt (Tri-n-Buten, T) in den Reaktionskessel zurückgeführt. Nach der erneuten Reaktion über 4 Stunden unter 260 bar Synthesegasdruck (CO/H₂, Massenverhältnis 1 : 1), bei 150 °C wurde das Reaktionsproduktgemisch nach Abkühlung auf 60 °C und vollständiger Entgasung wieder mit dem darin gelösten Katalysatorsystem zur Nanofiltrationsanlage überführt. Insgesamt wurden auf diese Weise erneut 4 Batch-Reaktionen und 3 Nanofiltrationszyklen durchgeführt.

Die Prozesskette wurde an Hand von Mess- und Analysendaten, die durch gaschromatographische Analyse, HPLC-Analyse, Atomabsorptionsspektroskopie und Optische Emissionsspektrometrie mit induktiv gekoppeltem Hochfrequenzplasma erhalten wurden, ausgewertet. Die Reaktionen wurden hinsichtlich Umsatz Tri-n-Buten sowie Ausbeute und Selektivität Isotridecanal untersucht. Die Nanofiltration wurde hinsichtlich Permeatfluss und Rückhalt für Rhodium und Ligand untersucht. Tabelle 2 zeigt die Ergebnisse der Versuche.

**Tabelle 2: Ergebnisse Beispiel 2**

| | | | |
|---|---|---|---|
| Verfahrensschritt | Strombezeichnung | Einsatzmasse, Massenanteil | Probenmasse gesamt |
| | | Hauptkomponenten w [-], | [g] |
| | | Rh [mg] | Umsatz (U) |
| | | Ligand [mg] | Selektivität (S) |
| | | | Rückhalt (R) |
| HF I, Start | Einsatzstoff (ohne Synthesegas) | 1023,6 g Einsatzmasse | Probenmasse: 65,6 g, |
| | | 1,00 Tri-n-Buten | davon Rh: 0,40 mg |
| | | 0,00 Isotridecanal | |
| | | 0,00 Isotridecanol | |
| | | 0,00 sonstige Stoffe | |
| | | 8,75 mg Rh | |
| | | 291 mg Ligand | |
| HF I, Ende (=Start NF I) | Flüssiger HF-Autrag I (zur NF I) | 1124,8 g Gesamtmasse | Probenmasse: 19,2 g, |
| | | 0,14 Tri-n-Buten | davon Rh: 0,14 mg |
| | | 0,79 Isotridecanal | U; TnB: 0,83 |
| | | 0,06 Isotridecanol | S, ITDA: 0,93 |
| | | 0,00 sonstige Stoffe | |
| | | 8,35 mg Rh* | |
| | | 279 mg Ligand | |
| NF I | Permeataustrag I | 953,6 g Permeatmasse | |
| | | 0,16 Tri-n-Buten | |
| | | 0,74 Isotridecanal | |
| | | 0,09 Isotridecanol | |
| | | 0,00 sonstige Stoffe | |
| | | 0,16 mg Rh | |
| | | 3,0 mg Ligand | |
| NF I | Retentat I | 152,0 g Retentatmasse | R, Rh: 0,98 |
| | | 8,05 mg Rh* | R, Ligand: 0,99 |
| | | 276 mg Ligand | |
| HF II | Einsatzstoff II | 1035,8 g Gesamtmasse | Probenmasse: 63,0 g, |
| | | 0,86 Tri-n-Buten | davon Rh: 0,44 mg |
| | | 0,13 Isotridecanal | |
| | | 0,01 Isotridecanol | |
| | | 0,00 sonstige Stoffe | |
| | | 8,05 mg Rh* | |
| | | 276 mg Ligand | |
| HF II | Flüssiger HF-Austrag II | 1110,2 g Gesamtmasse | Probenmasse: 18,0 g, |
| | (zur NF II) | 0,18 Tri-n-Buten | davon Rh: 0,10 mg |
| | | 0,77 Isotridecanal | U, TnB: 0,76 |
| | | 0,05 Isotridecanol | S, ITDA: 0,94 |
| | | 0,00 sonstige Stoffe | |
| | | 7,61 mg Rh* | |
| | | 260 mg Ligand | |
| NF II | Permeataustrag II | 875,6 g Permeatmasse | |
| | | 0,20 Tri-n-Buten | |
| | | 0,74 Isotridecanal | |
| | | 0,05 Isotridecanol | |
| | | 0,01 sonstige Stoffe | |
| | | 0,19 mg Rh | |
| | | 5,10 mg Ligand | |
| NF II | Retentat II | 216,6 g Retentatmasse | R, Rh: 0,99 |
| | | 7,32 mg Rh* | R, Ligand: 0,98 |
| | | 254,9 mg Ligand | |
| HF III | Einsatzstoff III | 1045,2 g Gesamtmasse | Probenmasse: 60,5 g, |
| | | 0,87 Tri-n-Buten | davon Rh: 0,42 mg |
| | | 0,11 Isotridecanal | |
| | | 0,01 Isotridecanol | |
| | | 0,00 sonstige Stoffe | |
| | | 7,32 mg Rh* | |
| | | 254,9 mg Ligand | |
| HF III | Flüssiger HF-Austrag (zur NF III) | III 1106,1 g Gesamtmasse | Probenmasse: 19,6 g, |
| | | 0,22 Tri-n-Buten | davon Rh: 0,09 mg |
| | | 0,74 Isotridecanal | U, TnB: 0,72 |
| | | 0,04 Isotridecanol | S, ITDA: 0,96 |
| | | 0,00 sonstige Stoffe | |
| | | 6,9 mg Rh* | |
| | | 244,0 mg Ligand | |
| NF III | Permeataustrag III | 853,4 g Permeatmasse | |
| | | 0,23 Tri-n-Buten | |
| | | 0,73 Isotridecanal | |
| | | 0,04 Isotridecanol | |
| | | 0,01 sonstige Stoffe | |
| | | 0,32 mg Rh | |
| | | 4,5 mg Ligand | |
| NF III | Retentat III | 233,1 g Retentatmasse | R, Rh: 0,95 |
| | | 6,53 mg Rh* | R, Ligand: 0,98 |
| | | 239,5 mg Ligand | |
| HF IV | Einsatzstoff IV | 1049,9 g Gesamtmasse | Probenmasse: 64,3 g, |
| | | 0,88 Tri-n-Buten | davon Rh: 0,28 mg |
| | | 0,11 Isotridecanal | |
| | | 0,01 Isotridecanol | |
| | | 0,00 sonstige Stoffe | |
| | | 6,53 mg Rh* | |
| | | 239,5 mg Ligand | |
| HF IV | Flüssiger HF-Austrag | 1104,1 g Gesamtmasse | U, TnB: 0,60 |
| | IV | 0,32 Tri-n-Buten | S, ITDA: 0,97 |
| | (Endprodukt) | 0,66 Isotridecanal | |
| | | 0,02 Isotridecanol | |
| | | 0,00 sonstige Stoffe | |
| | | 4,29 mg Rh | |
| | | (6,25 mg Rh*, berechnet) | |
| | | 247 mg Ligand | |

| | | | |
|---|---|---|---|
| Anmerkungen: Die mit * gekennzeichneten Werte sind aus der Bilanz errechnet. TnB steht für Tri-n-Buten, ITDA steht für Isotridecanal, HF steht für Hydroformylierung und NF für Nanofiltration. | | | |

Die Nanofiltration zeigte bei einer spezifischen Permeatflussleistungen zwischen 4 und 6 [kg/m²h] sowohl gegenüber dem Liganden Alkanox, wie auch gegenüber dem Rhodium einen Membranrückhalt zwischen 80 bis 95 % am Anfang der Konzentrierung und > 99 % am Ende der Konzentrierung. Die Bilanz über die gesamte Prozesskette zeigte, dass 7,1 % der ursprünglich eingesetzten Rohdiummasse von 8,3 mg dem System über das Permeat entzogen wurden. Zusätzlich ging Rhodium über die Probenentnahme in Höhe von insgesamt 21,5% verloren.

Am Ende der Prozesskette hätten gemäß der Bilanz noch 71,4 % des ursprünglich eingesetzten Rhodiums entsprechend 6,25 mg im Reaktor vorhanden sein müssen. Tatsächlich gefunden wurden 4,29 mg. Demnach waren ca. 22,4 % des eingesetzten Rhodiums durch Verclusterung dem System als aktiver Katalysator verloren gegangen. Die Reaktion IV zeigte dementsprechend auch keine der theoretisch noch im System vorhandenen Rhodium-Menge entsprechenden Aktivität mehr. Die reduzierte Aktivität lässt sich allerdings mit der tatsächlich gemessenen Rh-Konzentration am Ende der Versuche erklären.

Der Vergleich der Beispiele 1 und 2 belegt, dass die vollständige Entgasung vor der Membranstufe dazu führt, dass durch den fehlenden Liganden CO eine Verclusterung der Rh-Ligandkomplex eingeleitet wird. Dies führt zunächst zu einer besseren Abtrennbarkeit des Rhodium-Katalysators. Dieser Vorteil ist jedoch unwirksam, da durch den irreversibel verclusterten Rh-Anteil dem System tatsächlich aktiver Katalysator entzogen wird.

## Patentansprüche

1. Verfahren zur Abtrennung eines gelösten Komplexkatalysators eines Metalls der 4., 5., 6., 7., 8., 9. oder 10. Gruppe des Periodensystems der Elemente, der einen Organophosphor-Ligand aufweist, aus einer nicht-wässrigen Hydroformylierungs-Reaktionsmischung, die ein Hydroformylierungsprodukt und ein organisches Lösemittel enthält, wobei das Verfahren zumindest einen Membrantrennschritt aufweist, bei dem zumindest eine Membran eingesetzt wird, die für das Hydroformylierungsprodukt besser durchlässig ist als für den Organophosphor-Liganden,
**dadurch gekennzeichnet,**
**dass** die Hydroformylierungs-Reaktionsmischung in dem Membrantrennschritt auf eine Membran geführt wird, wobei der Membrantrennschritt bei einem Kohlenmonoxid-Partialdampfdruck von mindestens 200 kPa im Membranzufluss, im Membranabfluss und im Permeat durchgeführt wird.

2. Verfahren nach Anspruch 1,
**dadurch gekennzeichnet,**
**dass** zwei oder mehrere Membrantrennschritte eingesetzt werden.

3. Verfahren nach Anspruch 1 oder 2,
**dadurch gekennzeichnet,**
**dass** in einem Membrantrennschritt zwei oder mehrere Membrane eingesetzt werden.

4. Verfahren nach zumindest einem der Ansprüche 1 bis 3,
**dadurch gekennzeichnet,**
**dass** das Hydroformylierungs-Reaktionsgemisch mit einem Druck, der zu 90 bis 100 % dem Druck im Hydroformylierungsreaktor entspricht, auf die Membran gefahren wird.

5. Verfahren nach zumindest einem der Ansprüche 1 bis 3,
**dadurch gekennzeichnet,**
**dass** das Hydroformylierungs-Reaktionsgemisch mit einem Druck, der zu 60 bis 90 % dem Druck im Hydroformylierungsreaktor entspricht, auf die Membran gefahren wird.

6. Verfahren zumindest einem der Ansprüche 1 bis 3,
**dadurch gekennzeichnet,**
**dass** das Hydroformylierungs-Reaktionsgemisch mit einem Druck, der zu 40 bis 60 % dem Druck im Hydroformylierungsreaktor entspricht, auf die Membran gefahren wird, mit der Maßgabe, dass der Kohlenmonoxid-Partialdampfdruck mindestens 200 kPa beträgt.

7. Verfahren zumindest einem der Ansprüche 1 bis 3,
**dadurch gekennzeichnet,**
**dass** das Hydroformylierungs-Reaktionsgemisch mit einem Druck kleiner als 40 % des Druckes im Hydroformylierungsreaktor auf die Membran gefahren wird, mit der Maßgabe, dass der Kohlenmonoxid-Partialdampfdruck mindestens 200 kPa beträgt.

8. Verfahren nach mindestens einem der Ansprüche 1 bis 7,
**dadurch gekennzeichnet,**
**dass** die Abtrennung im Membrantrennschritt bei einer Temperatur von 30 bis 150 °C durchgeführt wird.

9. Verfahren nach zumindest einem der Ansprüche 1 bis 8,
**dadurch gekennzeichnet,**
**dass** die Abtrennung im Membrantrennschritt bei einem transmembranen Druck von zumindest 1 MPa durchgeführt wird.

10. Verfahren nach Anspruch 9,
**dadurch gekennzeichnet,**
**dass** die Abtrennung bei einem transmembranen Druck von 1 bis 10 MPa durchgeführt wird.

11. Verfahren nach zumindest einem der Ansprüche 1 bis 10,
**dadurch gekennzeichnet,**
**dass** die Membran ausgewählt ist aus Membranen, die als trennaktive Schicht eine Polymerschicht aus Polydimethlysiloxan (PDMS), Polyimid (P1), Polyamidimid (PAI) Acrylonitril/Glycidylmethacrylat (PANGMA), Polyamid (PA) oder Polyetheretherketon (PEEK) aufweisen, oder die trennaktive Schicht aus Polymeren mit intrinsischer Mikroporösität (PIM) aufgebaut ist, oder die trennaktive Schicht über eine hydrophobierte keramische Membran aufgebaut ist.

12. Verfahren nach mindestens einem der Ansprüche 1 bis 11,
**dadurch gekennzeichnet,**
**dass** eine Membran eingesetzt wird, die im Lösemittelsystem für Moleküle bis zu einer Molmasse von 1000 g/mol durchlässig sind.

13. Verfahren nach mindestens einem der Ansprüche 1 bis 12,
**dadurch gekennzeichnet,**
**dass** die Membrane in Form von Membranmodulen eingesetzt werden, die Membranmodule mit offenkanaligen Kissenmodulsystemen, bei denen die Membranen thermisch zu Membrantaschen verschweißt sind, oder offenkanaligen (Wide-spacer) Wickelmodulen, bei denen die Membranen zu Membrantaschen verklebt und mit Feedspacem um ein Permeatsammelrohr aufgewickelt sind, aufweisen.

14. Verfahren nach mindest einem der Ansprüche 1 bis 13,
**dadurch gekennzeichnet,**
**dass** der Membrantrennschritt mit einer Überströmgeschwindigkeit an der Membran von 0,1 bis 15 m/sec. durchgeführt wird.

15. Verfahren nach zumindest einem der Ansprüche 1 bis 14,
**dadurch gekennzeichnet,**
**dass** das Volumenstromverhältnis des auf die erste Membran des ersten Membrantrennschritts geführten Stroms (Zulauf vom Reaktor inklusive rückgeführtem Retentat) zu Permeatstrom von 10 bis 10000 zu 1 beträgt.

16. Verfahren nach zumindest einem der Ansprüche 1 bis 15,
**dadurch gekennzeichnet,**
**dass** das Molekular-Volumenverhältnis des Organophosphor-Liganden zu Hydroformylierungsprodukt größer-gleich 1,5 beträgt.

17. Verfahren nach zumindest einem der Ansprüche 1 bis 16,
**dadurch gekennzeichnet,**
**dass** eine Hydroformylierungs-Reaktionsmischung eingesetzt wird, die als Hydroformylierungsprodukt ein Aldehyd, ausgewählt aus den Aldehyden mit 5 bis 17 Kohlenstoffatomen, aufweist.

18. Verfahren nach zumindest einem der Ansprüche 1 bis 17,
**dadurch gekennzeichnet,**
**dass** eine Hydroformylierungs-Reaktionsmischung eingesetzt wird, die ein Acyl- oder Heteroacylphosphit als Organophosphor-Ligand aufweist.

19. Verfahren nach zumindest einem der Ansprüche 1 bis 18,
**dadurch gekennzeichnet,**
**dass** eine Hydroformylierungs-Reaktionsmischung eingesetzt wird, in der ein Organophosphor-Ligand als freier Ligand vorhanden ist.

20. Verfahren nach Anspruch 19,
**dadurch gekennzeichnet,**
**dass** molare Verhältnis von Aldehydprodukt zu freiem Ligand im Zustrom zum ersten Membrantrennschritt mehr als 10 zu 1 beträgt

21. Verfahren nach zumindest einem der Ansprüche 1 bis 20,
**dadurch gekennzeichnet,**
**dass** der Metall-Komplexkatalysator als Metall Rhodium aufweist.

22. Verfahren nach zumindest einem der Ansprüche 1 bis 21,
**dadurch gekennzeichnet,**
**dass** nach einem Membrantrennschritt ein thermischer Trennschritt zur Abtrennung des Hydroformylierungsproduktes durchgeführt wird.

23. Verfahren nach Anspruch 22,
**dadurch gekennzeichnet,**
**dass** das Sumpfprodukt des thermischen Trennschritts, das Hochsieder und Katalysatorkomplex aufweist, einem weiteren Membrantrennschritt zugeführt wird, bei dem aus dem Sumpfprodukt ein Teil der Hochsieder als Permeat abgetrennt und der im Retentat verbliebene Katalysatorkomplex zumindest teilweise in den Reaktor zurückgeführt wird.

24. Verfahren nach zumindest einem der Ansprüche 21 oder 22,
**dadurch gekennzeichnet,**
**dass** der Gesamtrückhalt an Komplexkatalysator des Verfahrens aus zumindest einem ersten Membrantrennschritt, zumindest einem thermischen Trennschritt und gegebenenfalls anschließendem zumindest einem Membrantrennschritt, mehr als 98 % beträgt.

## Claims

1. Process for separating a dissolved complex catalyst of a metal of group 4, 5, 6, 7, 8, 9 or 10 of the Periodic Table of the Elements which has an organophosphorus ligand from a nonaqueous hydroformylation reaction mixture which contains a hydroformylation product and an organic solvent, the process having at least one membrane separation step in which at least one membrane which is more permeable to the hydroformylation product than to the organophosphorus ligand is used, **characterized in that** the hydroformylation reaction mixture is supplied to a membrane in the membrane separation step, the membrane separation step being carried out at a carbon monoxide partial vapor pressure of at least 200 kPa in the flow to the membrane, in the flow from the membrane and in the permeate

2. Process according to claim 1, **characterized in that** two or more membrane separation steps are used.

3. Process according to claim 1 or 2, **characterized in that** two or more membranes are used in a membrane separation step.

4. Process according to at least one of claims 1 to 3, **characterized in that** the hydroformylation reaction mixture is supplied to the membrane at a pressure which corresponds to from 90 to 100% of the pressure in the hydroformylation reactor.

5. Process according to at least one of claims 1 to 3, **characterized in that** the hydroformylation reaction mixture is supplied to the membrane at a pressure which corresponds to from 60 to 90% of the pressure in the hydroformylation reactor.

6. Process according to at least one of claims 1 to 3, **characterized in that** the hydroformylation reaction mixture is supplied to the membrane at a pressure which corresponds to from 40 to 60% of the pressure in the hydroformylation reactor, with the proviso that the carbon monoxide partial vapor pressure is at least 200 kPa.

7. Process according to at least one of claims 1 to 3, **characterized in that** the hydroformylation reaction mixture is supplied to the membrane at a pressure which is less than 40% of the pressure in the hydroformylation reactor, with the proviso that the carbon monoxide partial vapor pressure is at least 200 kPa.

8. Process according to at least one of claims 1 to 7, **characterized in that** the separation in the membrane separation step is carried out at a temperature of from 30 to 150°C.

9. Process according to at least one of claims 1 to 8, **characterized in that** the separation in the membrane separation step is carried out at a transmembrane pressure of at least 1 MPa.

10. Process according to claim 9, **characterized in that** the separation is carried out at a transmembrane pressure of from 1 to 10 MPa.

11. Process according to at least one of claims 1 to 10, **characterized in that** the membrane is selected from among membranes which comprise, as separation-active layer, a polymer layer composed of polydimethylsiloxane (PDMS), polyimide (PI), polyamidimide (PAI), acrylonitrile/glycidyl methacrylate (PANGMA), polyamide (PA) or polyether ether ketone (PEEK), or the separation-active layer is made up of polymers having intrinsic microporosity (PIM), or the separation-active layer is built up over a hydrophobicized ceramic membrane.

12. Process according to at least one of claims 1 to 11, **characterized in that** a membrane which in the solvent system is permeable to molecules having a molar mass of up to 1000 g/mol is used.

13. Process according to at least one of claims 1 to 12, **characterized in that** the membranes are used in the form of membrane modules having open-channeled cushion module systems in which the membranes are thermally welded to form membrane pockets or open-channeled (wide-spacer) rolled modules in which the membranes are adhesively bonded to form membrane pockets and are rolled up together with feed spacers around a permeate collection tube.

14. Process according to at least one of claims 1 to 13, **characterized in that** the membrane separation step is carried out using a flow velocity over the membrane of from 0.1 to 15 m/sec.

15. Process according to at least one of claims 1 to 14, **characterized in that** the volume flow ratio of the stream fed to the first membrane of the first membrane separation step (inflow from the reactor including recirculated retentate) to permeate stream is 10-10 000:1.

16. Process according to at least one of claims 1 to 15, **characterized in that** the molecular volume ratio of the organophosphorus ligand to hydroformylation product is greater than or equal to 1.5.

17. Process according to at least one of claims 1 to 16, **characterized in that** a hydroformylation reaction mixture which has an aldehyde selected from among aldehydes having from 5 to 17 carbon atoms as hydroformylation product is used.

18. Process according to at least one of claims 1 to 17, **characterized in that** a hydroformylation reaction mixture which has an acyl phosphite or heteroacyl phosphite as organophosphorus ligand is used.

19. Process according to at least one of claims 1 to 18, **characterized in that** a hydroformylation reaction mixture in which an organophosphorus ligand is present as free ligand is used.

20. Process according to claim 19, **characterized in that** the molar ratio of aldehyde product to free ligand in the feed stream to the first membrane separation step is more than 10:1.

21. Process according to at least one of claims 1 to 20, **characterized in that** the metal complex catalyst has rhodium as metal.

22. Process according to at least one of claims 1 to 21, **characterized in that** a thermal separation step for separating off the hydroformylation product is carried out after a membrane separation step.

23. Process according to claim 22, **characterized in that** the bottom product from the thermal separation step, which comprises high boilers and catalyst complex, is fed to a further membrane separation step in which part of the high boilers is separated off from the bottom product as permeate and the catalyst complex remaining in the retentate is at least partly recirculated to the reactor.

24. Process according to at least one of claims 21 and 22, **characterized in that** the total retention of complex catalyst in the process comprising at least one first membrane separation step, at least one thermal separation step and, if desired, at least one subsequent membrane separation step is more than 98%.

## Revendications

1. Procédé pour la séparation d'un catalyseur dissous de type complexe d'un métal du 4ème, 5ème, 6ème, 7ème, 8ème, 9ème ou 10ème groupe du système périodique des éléments, qui présente un ligand organophosphoré, d'un mélange réactionnel d'hydroformylation non aqueux qui contient un produit d'hydroformylation et un solvant organique, le procédé présentant au moins une étape de séparation sur membrane, lors de laquelle on utilise au moins une membrane qui est mieux perméable au produit d'hydroformylation qu'aux ligands organophosphorés, **caractérisé en ce que** le mélange réactionnel d'hydroformylation dans l'étape de séparation sur membrane est guidé sur une membrane, l'étape de séparation sur membrane étant réalisée à une tension de vapeur partielle de monoxyde de carbone d'au moins 200 kPa dans l'alimentation de la membrane, dans l'écoulement de la membrane et dans le perméat.

2. Procédé selon la revendication 1, **caractérisé en ce qu'**on utilise deux étapes de séparation sur membrane ou plus.

3. Procédé selon la revendication 1 ou 2, **caractérisé en ce qu'**on utilise dans une étape de séparation sur membrane deux membranes ou plus.

4. Procédé selon au moins l'une quelconque des revendications 1 à 3, **caractérisé en ce que** le mélange réactionnel d'hydroformylation est guidé sur la membrane à une pression qui correspond à 90 jusqu'à 100% de la pression dans le réacteur d'hydroformylation.

5. Procédé selon au moins l'une quelconque des revendications 1 à 3, **caractérisé en ce que** le mélange réactionnel d'hydroformylation est guidé sur la membrane à une pression qui correspond à 60 jusqu'à 90% de la pression dans le réacteur d'hydroformylation.

6. Procédé selon au moins l'une quelconque des revendications 1 à 3, **caractérisé en ce que** le mélange réactionnel d'hydroformylation est guidé sur la membrane à une pression qui correspond à 40 jusqu'à 60% de la pression dans le réacteur d'hydroformylation, à condition que la tension de vapeur partielle de monoxyde de carbone soit d'au moins 200 kPa.

7. Procédé selon au moins l'une quelconque des revendications 1 à 3, **caractérisé en ce que** le mélange réactionnel d'hydroformylation est guidé sur la membrane à une pression qui est inférieure à 40% de la pression dans le réacteur d'hydroformylation, à condition que la tension de vapeur partielle de monoxyde de carbone soit d'au moins 200 kPa.

8. Procédé selon au moins l'une quelconque des revendications 1 à 7, **caractérisé en ce que** la séparation dans l'étape de séparation sur membrane est réalisée à une température de 30 à 150°C.

9. Procédé selon au moins l'une quelconque des revendications 1 à 8, **caractérisé en ce que** la séparation dans l'étape de séparation sur membrane est réalisée à une pression transmembranaire d'au moins 1 MPa.

10. Procédé selon la revendication 9, **caractérisé en ce que** la séparation est réalisée à une pression transmembranaire de 1 à 10 MPa.

11. Procédé selon au moins l'une quelconque des revendications 1 à 10, **caractérisé en ce que** la membrane est choisie parmi des membranes qui présentent, comme couche active en séparation, une couche polymère en polydiméthylsiloxane (PDMS), en polyimide (PI), en polyamidimide (PAI), en acrylonitrile/méthacrylate de glycidyle (PANGMA), en polyamide (PA) ou en polyétheréthercétone (PEEK), ou la couche active en séparation est réalisée en polymères présentant une microporosité intrinsèque (PIM), ou la couche active en séparation est réalisée sur une membrane céramique hydrofugée.

12. Procédé selon au moins l'une quelconque des revendications 1 à 11, **caractérisé en ce qu'**on utilise une membrane qui est perméable dans le système de solvants à des molécules jusqu'à une masse molaire de 1000 g/mole.

13. Procédé selon au moins l'une quelconque des revendications 1 à 12, **caractérisé en ce que** les membranes sont réalisées sous forme de modules à membranes qui présentent des modules à membrane avec des systèmes de module à coussin à canaux ouverts, dans lesquels les membranes sont soudées thermiquement en sacs à membrane ou avec des modules enroulés à canaux ouverts (Wide-spacer), dans lesquels les membranes sont collées en sacs à membrane et enroulées avec des espaceurs côté alimentation autour d'un tube collecteur du perméat.

14. Procédé selon au moins l'une quelconque des revendications 1 à 13, **caractérisé en ce que** l'étape de séparation sur membrane est réalisée à un débit sur la membrane de 0,1 à 15 m/sec.

15. Procédé selon au moins l'une quelconque des revendications 1 à 14, **caractérisé en ce que** le rapport des flux volumiques du flux guidé sur la première membrane de la première étape de séparation sur membrane (alimentation du réacteur avec le rétentat recyclé) au flux de perméat est de 10 à 10 000:1.

16. Procédé selon au moins l'une quelconque des revendications 1 à 15, **caractérisé en ce que** le rapport volumique moléculaire des ligands organophosphorés au produit d'hydroformylation est supérieur ou égal à 1,5.

17. Procédé selon au moins l'une quelconque des revendications 1 à 16, **caractérisé en ce qu'**on utilise un mélange réactionnel d'hydroformylation qui présente, comme produit d'hydroformylation, un aldéhyde, choisi parmi les aldéhydes comprenant 5 à 17 atomes de carbone.

18. Procédé selon au moins l'une quelconque des revendications 1 à 17, **caractérisé en ce qu'**on utilise un mélange réactionnel d'hydroformylation, qui présente un phosphite d'acryle ou d'hétéroacyle comme ligand organophosphoré.

19. Procédé selon au moins l'une quelconque des revendications 1 à 18, **caractérisé en ce qu'**on utilise un mélange réactionnel d'hydroformylation, dans lequel un ligand organophosphoré existe sous forme de ligand libre.

20. Procédé selon la revendication 19, **caractérisé en ce que** le rapport molaire de l'aldéhyde produit au ligand libre dans le flux alimenté dans la première étape de séparation sur membrane est supérieur à 10:1.

21. Procédé selon au moins l'une quelconque des revendications 1 à 20, **caractérisé en ce que** le catalyseur de type complexe métallique présente du rhodium comme métal.

22. Procédé selon au moins l'une quelconque des revendications 1 à 21, **caractérisé en ce qu'**on réalise, après une étape de séparation sur membrane une étape de séparation thermique pour la séparation du produit d'hydroformylation.

23. Procédé selon la revendication 22, **caractérisé en ce que** le produit résiduel de l'étape de séparation thermique, qui présente les composés à point d'ébullition élevé et le complexe de catalyseur, est alimenté dans une autre étape de séparation sur membrane, dans laquelle on sépare du produit résiduel une partie des substances à point d'ébullition élevé comme perméat et le complexe de catalyseur restant dans le rétentat est recyclé au moins partiellement dans le réacteur.

24. Procédé selon au moins l'une quelconque des revendications 21 ou 22, **caractérisé en ce que** la rétention totale de catalyseur de type complexe du procédé formée par au moins une première étape de séparation sur membrane, au moins une étape de séparation thermique et le cas échéant ensuite au moins une étape de séparation sur membrane, est supérieure à 98%.
